# EUROPEAN PATENT SPECIFICATION

(11) **EP 3 854 925 B1**
(45) Date of publication and mention of the grant of the patent: **20.11.2024**
(21) Application number: 21153298.1
(22) Date of filing: 25.01.2021
(51) Int. Cl.: D05B 19/02, G06T 19/20, A41H 3/00

(54) **AUTOMATIC DETERMINATION OF SEWING LINES FOR ASSEMBLING PATTERN PIECES OF GARMENT**
AUTOMATISCHE BESTIMMUNG VON NÄHLINIEN ZUM ZUSAMMENSETZEN VON MUSTERTEILEN EINES KLEIDUNGSSTÜCKS
DÉTERMINATION AUTOMATIQUE DE LIGNES DE COUTURE POUR L'ASSEMBLAGE DE PIÈCES DE PATRON DE VÊTEMENT

(30) Priority: 23.01.2020 KR 20200009358; 22.09.2020 KR 20200122350; 22.09.2020 KR 20200122378; 18.12.2020 KR 20200178512
(43) Date of publication of application: 28.07.2021
(73) Proprietor: CLO Virtual Fashion Inc., Seoul 06039 (KR)
(72) Inventor: MA, Jaehwan, 06039 Seoul (KR)
(74) Representative: V.O.

(56) References cited:
- CN-A- 107 958 488
- US-A1- 2017 105 468
- US-A1- 2017 109 926
- US-A1- 2018 096 082

## Description

### BACKGROUND

### 1. Field of the Invention

Embodiments relate to automatically determining sewing lines for pattern pieces that form a garment.

### 2. Description of the Related Art

Sewing refers to cutting and stitching of fabrics or the like. With an increase in the number of two-dimensional pattern pieces in a garment, the number of sewing lines for attaching pattern pieces is also increased. When a large number of sewing lines are used, much time and efforts may be involved in manually identifying pattern pieces and their matching sewing lines.

US2017/0105468 discloses a computer-implemented method for defining seams of a virtual garment or upholstery comprising a plurality of two-dimensional patterns assembled by their edges, the method comprising the steps of:
a) arranging said patterns around a three-dimensional avatar, the position of each pattern depending on its situation within the assembled garment or upholstery; and
b) for each edge of each pattern, except edges previously identified as seamless:
   b1) automatically identifying at least one edge, called candidate edge, which is suitable to be seamed to it;
   b2) if a plurality of candidate edges have been identified, selecting one of them based on at least one geometric criterion; and
   b3) defining a seam between the edge and the selected, or the only, candidate edge;
   said steps b1), b2) and b3) being performed automatically by a computer.

US2017/0109926 relates to a computer-implemented method for designing a manufacturable garment provides a three-dimensional shape representing a garment segmented into a set of three-dimensional panels (3DP). The method computes for each three-dimensional panel, a corresponding flattened pattern (FP). The method defines a mesh (MF, M3D) on each of said three-dimensional panels and flattened patterns; and simulates a draping of the segmented three-dimensional shape over a three-dimensional manikin (MK) by progressively imposing a constraint that each mesh element (ME3) of said three-dimensional panels adopts dimensions (EEL) of a corresponding mesh element (MEF) of the corresponding flattened pattern while it conforms to the manikin shape.

### SUMMARY

Embodiments relate to a computer-implemented method of determining sewing lines for sewing pattern pieces combined to form a garment. Placement information of at least a subset of pattern pieces is received. The placement information indicates at least matching relationships between at least the subset of the pattern pieces and placement points of an avatar onto which the garment is draped. A graph comprising nodes and segments is generated. The nodes are located on outlines of the pattern pieces. Each of the segments indicating a directed connection between adjacent ones of the nodes. Matching edges of at least the subset of the pattern pieces identified by the placement information are determined as sewing lines for at least the subset of the pattern pieces using the graph. An edge represents an area in one of the pattern pieces to be sewn with another one of the pattern pieces and including at least one of the segments.

In one or more embodiments, the graph is generated by extracting, from points on the outlines of at least the subset of the pattern pieces, a corner point at which portions of an outline intersect with an angle that is larger than a predetermined reference angle. A notch is extracted from the points on the outlines of at least the subset of the pattern pieces. The notch corresponds to a point where a notch mark is located. The notch is a reference point for sewing. For example, when each of the two segments sewn to each other includes a corresponding notch, the two segments may be sewn according to the corresponding notches. The notch mark is a mark expressing a notch, and may be expressed in various forms such as a V-shape, a U-shape, a circle, or a vertical line, etc. The corner point and the notch are sent as nodes. A line connecting two adjacent ones of the nodes is set as one of the segments. The nodes and the segments are included in the graph.

In one or more embodiments, each of the edges comprises (i) a pair of segments in an edge and (ii) directions of the segments.

In one or more embodiments, the matching edges are determined by sequentially matching edges corresponding to areas of at least the subset of pattern pieces to be sewn based on a matching order set according to the placement information and the graph, and converting the matched edges into the sewing lines for the pattern pieces.

In one or more embodiments, the sequentially matching of the edges includes configuring a candidate edge set by extracting edges of each of the pattern pieces based on the placement information, extracting candidate edge pair sets comprising matched edge pairs from the edges, matching the edge pairs based on a matching cost of the edge pairs included in the candidate edge pair set, validating a matching result between the edge pairs to generate a validation result, and marking remaining edges other than the matched edge pairs with a tag indicating a shape expected for a part of the garment, based on the validation result.

In one or more embodiments, the matching cost is calculated according to mergeability of the edges as determined by at least one of (i) a tag indicating each of edges that form an edge pair, and (ii) a characteristic of each of the edges that form the edge pair.

In one or more embodiments, the matching cost is calculated in advance based on at least one of a length ratio between edges that form an edge pair, a total length of the edges that form the edge pair, directions of normal vectors of the edges that form the edge pair, and a distance between edges which configure the edge pair.

In one or more embodiments, the matching of the edge pairs is performed by at least sequentially matching the edge pairs from an edge pair having a lowest matching cost, among edge pairs included in the candidate edge sets.

In one or more embodiments, the matching of the edge pairs is performed by comparing a matching cost of the edge pairs included in the candidate edge set with a predetermined threshold value, and completing the matching between the edge pairs when the matching cost exceeds the threshold value.

In one or more embodiments, a matching result is validated by determining whether the edge pairs according to the matching result yields a shape expected for each part of the garment.

In one or more embodiments, the graph corresponding to the matched edge pair is merged. A new edge is generated by concatenating segments corresponding to the merged graph.

In one or more embodiments, the matched edges are converted into the sewing lines by searching for nodes corresponding to the matched edges, and generating the sewing lines for the pattern pieces by pairing the searched nodes.

In one or more embodiments, nodes corresponding to the matched edges include a starting node corresponding to a starting point of the matched edges, an ending node corresponding to an ending point of the matched edges, and internal nodes located between the starting node and the ending node.

In one or more embodiments, the matching edges are determined by determining presence of a loop between the starting point and the ending point, aligning the internal nodes in an order of normalized lengths responsive to determining that the loop is not present, and pairing an internal node of an opposite matched edge with an internal node of a most adjacent edge.

In one or more embodiments, the matching edges are determined by determining presence of a loop between the starting point and the ending point, pairing the nodes by setting each of the nodes as the starting node responsive to determining that the loop is present, and determining a pairing score according to the pairing between the nodes.

In one or more embodiments, at least one of: (i) generating a digital representation of the garment in which the pattern pieces are sewn along the sewing lines; and (ii) displaying draping of the digital representation of the garment on an avatar is performed.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a flowchart illustrating an automatic sewing method according to an example embodiment;
FIG. 2 is a diagram illustrating placement information of pattern pieces, according to an example embodiment;
FIG. 3 is a diagram illustrating nodes and a segment of a graph, according to an example embodiment;
FIG. 4 is a diagram illustrating a segment and an edge, according to an example embodiment;
FIG. 5 is a diagram illustrating a method of generating a graph, according to an example embodiment;
FIG. 6 is a diagram illustrating a graph generated according to an example embodiment;
FIG. 7 is a diagram illustrating a matching order set according to an example embodiment;
FIG. 8 is a flowchart illustrating a method of generating a sewing line, according to an example embodiment;
FIG. 9 is a flowchart illustrating a method of sequentially matching edges, according to an example embodiment;
FIG. 10 is a diagram illustrating a program coding representing a matching order, according to an example embodiment;
FIG. 11 is a diagram illustrating a process of generating a new edge, according to an example embodiment;
FIG. 12 is a flowchart illustrating a method of converting matched edges into a sewing line for pattern pieces, according to an example embodiment;
FIG. 13 is a diagram illustrating a method of paring nodes, according to an example embodiment;
FIG. 14 is a diagram illustrating a sewing line for pattern pieces generated by an automatic sewing apparatus, according to an example embodiment;
FIG. 15 is a diagram illustrating a garment formed of pattern pieces sewn along a sewing line generated by an automatic sewing apparatus, according an example embodiment is draped on an avatar; and
FIG. 16 is a block diagram of an automatic sewing apparatus according to an example embodiment.

### DETAILED DESCRIPTION

Hereinafter, example embodiments will be described in detail with reference to the accompanying drawings. However, various changes may be applied to the example embodiments so that the scope of the application is not restricted or limited by the example embodiments. It should be understood that all changes, equivalents, or substitutes of example embodiments are included in the scope of the rights.

Terms used in the example embodiment are used only for illustrative purposes only, and should not be interpreted as an intention to limit the invention. A singular form may include a plural form if there is no clearly opposite meaning in the context. In the present specification, it should be understood that terminology "include" or "have" indicates that a feature, a number, a step, an operation, a component, a part or the combination thereof described in the specification is present, but do not exclude a possibility of presence or addition of one or more other features, numbers, steps, operations, components, parts or combinations, in advance.

Unless otherwise defined, all terms including technical or scientific terms used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

In description with reference to accompanying drawings, the same components are denoted by the same reference numerals regardless of the reference numeral and a duplicated description thereof will be omitted. In description of an example embodiment, if it is determined that a detailed description for a related art may unnecessarily blur the gist of the example embodiment, the detailed description will be omitted.

Further, in the description of the components of the example embodiment, a terminology such as a first, a second, A, B, (a), (b) may be used. However, such terminologies are used only to distinguish a component from another component, but nature, a sequence or an order of the component is not limited by the terminologies. If it is described that a component is "connected" or "coupled" to another component, it is understood that the component is directly connected or coupled to the other component but another component may be "connected" or "coupled" between the components.

A component including a common function to a component included in any one example embodiment will be described with the same title in another example embodiment. If it is not contrarily defined, description of any one example embodiment may be applied to another example embodiment and a detailed description of overlapping parts will be omitted.

Pattern pieces, as described herein, refer to two-dimensional pattern pieces that are sewn together to form a three-dimensional garment that may be draped onto a three-dimensional avatar. Each pattern piece may correspond to, for example, a body part of the three-dimensional avatar, such as a sleeve, bodices (front and back body), a neck collar, and bottoms. A garment may be a three-dimensional virtual garment generated and processed by a computer program.

The two-dimensional pattern may be modeled with meshes including a plurality of polygons (for example, triangles) for the purpose of simulation of the three-dimensional virtual garment (clothes). Three vertexes of the polygon (triangle) are points having a mass (point mass) and each side of the polygon may be represented by springs having elasticity to connect the masses. Therefore, the two-dimensional pattern may be modeled, for example, by a mass-spring model. Here, the springs may have respective resistances for stretching, shearing, and bending, according to a physical property of a fabric to be used. Each vertex may move according to an action of an external force such as gravity and internal force of the stretching, the shearing, and the bending. If a force applied to each vertex is calculated by calculating the external force and the internal force, a displacement and a velocity of the movement of each vertex may be calculated. The movement of the virtual garment may be simulated by means of the movement of the vertexes of the polygon in each time step. When the two-dimensional virtual garment patterns formed of meshes are draped on the three-dimensional avatar, a natural three-dimensional virtual garment based on the laws of physics may be implemented.

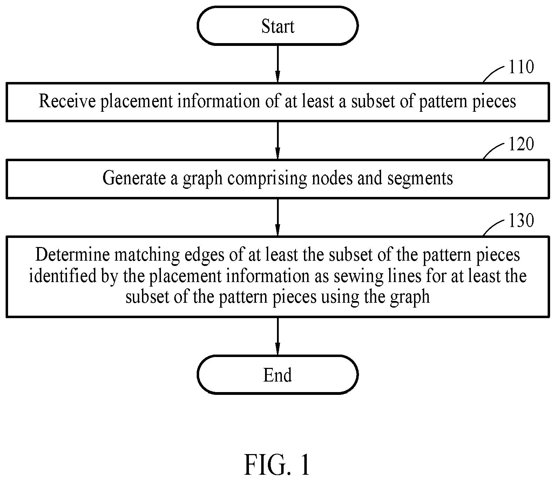

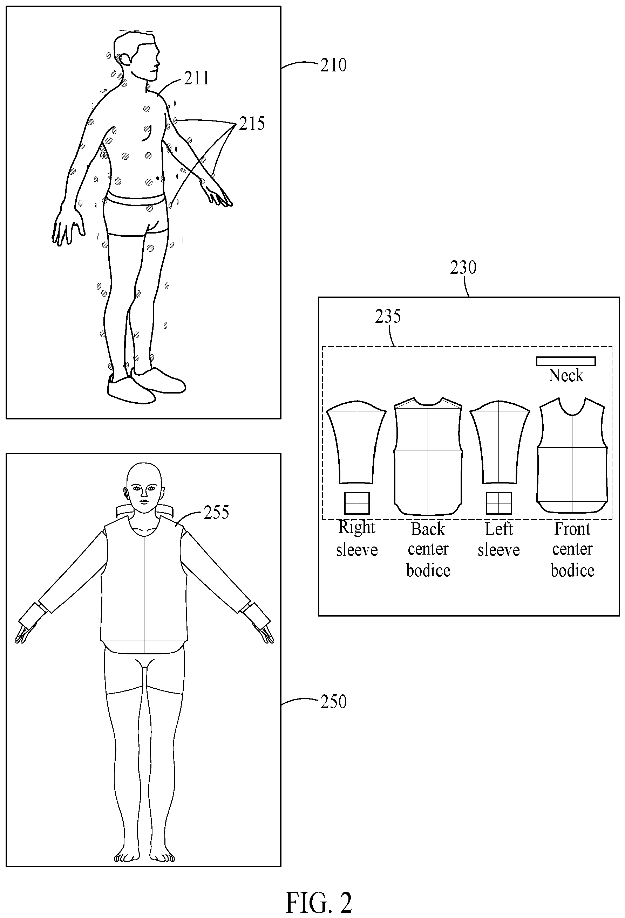

FIG. 1 is a flowchart illustrating a process of generating sewing lines for pattern pieces by an automatic sewing apparatus according to an example embodiment. An automatic sewing apparatus receives 110 placement information of pattern pieces which form a garment. The placement information may represent a matching relationship between pattern pieces of the garment and placement points of the avatar. A placement point refers to a point provided in advance to facilitate disposing of a specific pattern piece of a garment on an avatar. Example placement points 215 are shown in FIG. 2. Each placement point may include information indicating a part (body part) of the avatar corresponding to the corresponding placement point. The placement information of the pattern pieces will be described in more detail with reference to FIG. 2 below.

The automatic sewing apparatus generates 120 a graph including nodes located on an outline of the pattern pieces and segments. A segment described herein refers to a directed connection between adjacent nodes. The nodes may include, for example, corner points, notches, and the like, located on the outline of the pattern pieces.

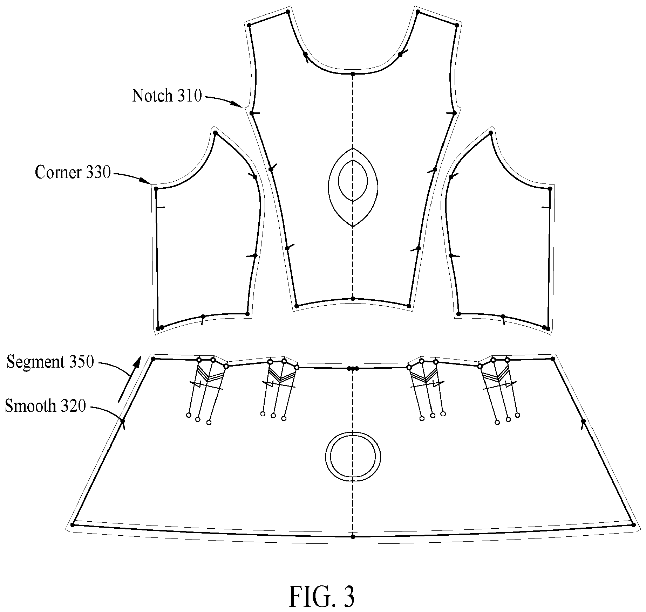

To generate a graph, the automatic sewing apparatus may extract a corner point having an angle that is larger than a predetermined reference angle from points located on the outline of the pattern pieces. The corner point may also be referred to as a "sharp point" or a "vertex." If the degree of discontinuity is large around a corresponding point, the corresponding point may be defined as a corner point. For example, when an angle of both edges connected to the corresponding point is larger than a threshold angle or directions along which the edges extend differ more than a threshold difference, the automatic sewing apparatus may define the corresponding point as a corner point. Further, the automatic sewing apparatus may extract a notch corresponding to a point where the notch mark is located, from points located on the outline of the pattern pieces. The automatic sewing apparatus may set the corner points and the notches as nodes and set lines indicating directed connections between the nodes as segments. The automatic sewing apparatus may generate a graph including the nodes and the segments. The nodes, the segments, and the graph according to the example embodiment will be described in detail with reference to FIGS. 3 to 5 below.

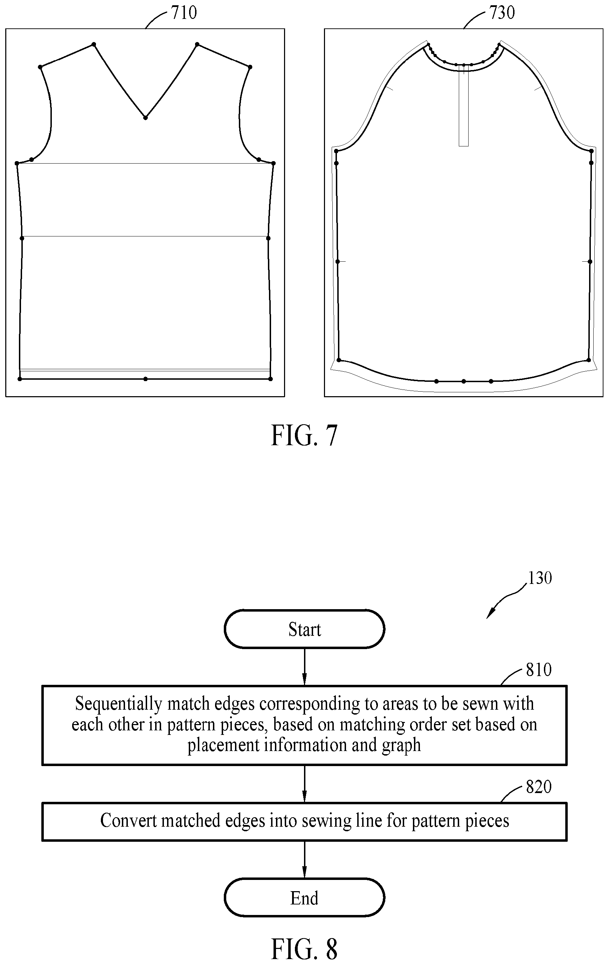

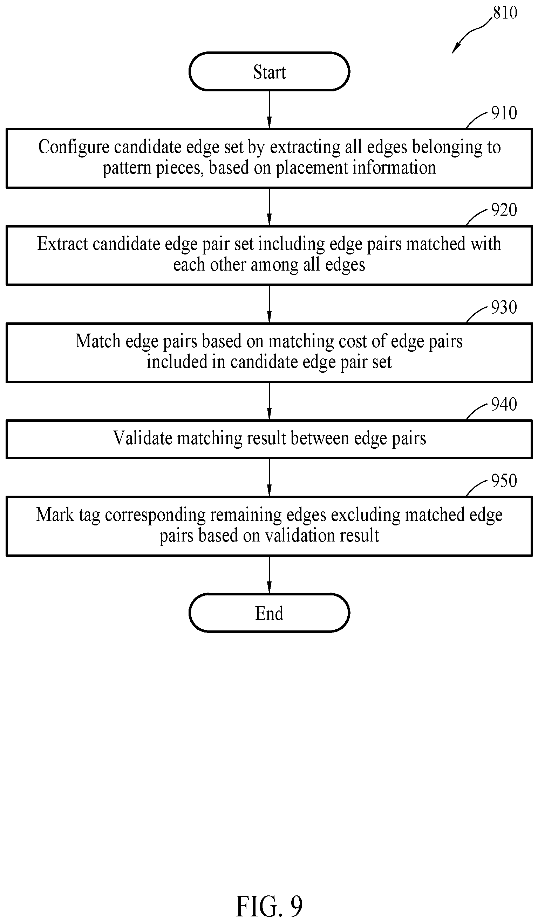

The automatic sewing apparatus generates 130 sewing lines for the pattern pieces by matching edges, based on the placement information and the graph. An "edge" described herein refers to an area in a pattern piece that is to be sewn with another area of another pattern piece or the same pattern piece. The process of generating sewing lines by the automatic sewing apparatus will be described in more detail with reference to FIGS. 8 and 9 below.

The automatic sewing apparatus may output pattern pieces including the sewing line generated or sew pattern pieces along the sewing line. The automatic sewing apparatus may sew the pattern pieces in the order of bodices and sleeves, for example. Further, the automatic sewing apparatus may sew sub parts of the bodice in the order of a front bodice, a back bodice, a side, and a shoulder, for example.

For example, when the marked edges correspond to a collar of the garment, the automatic sewing apparatus may identify side edges corresponding to at least one side of the collar, based on the graph. After determining whether to sew the side edges, based on the bodice, the automatic sewing apparatus may identify upper and lower edges of at least one collar, based on the identified side edges. The automatic sewing apparatus may generate a collar by laminating and sewing at least one collar, based on the identified upper and lower edges.

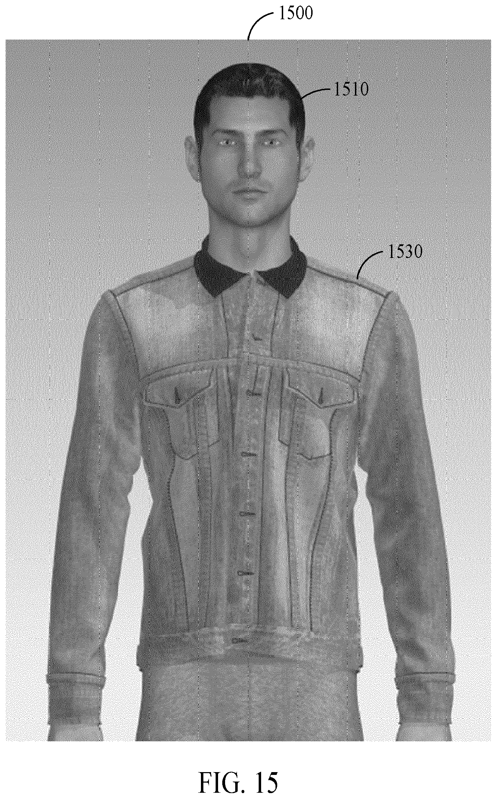

The automatic sewing apparatus may perform simulation by draping the garment formed of the pattern pieces sewn along the sewing line, for example, on an avatar as illustrated in FIG. 15. The automatic sewing apparatus may simulate at least one of the virtual garment configured by sewing the pattern pieces and a three-dimensional avatar which drapes the virtual garment. As described herein, "draping" refers to a process of simulating placing of a three-dimensional garment obtained by connecting or sewing two-dimensional pattern pieces onto a three-dimensional avatar by a computing device.

FIG. 2 is a diagram illustrating placement information of pattern pieces according to an example embodiment. Referring to FIG. 2, a screen 210 representing placement points 215 of an avatar 211 to drape the garment, a screen 230 representing pattern pieces 235, and a screen 250 representing pattern pieces 255 disposed to be adjacent to the avatar by the user are illustrated. For example, when the user selects a garment to which the automatic sewing is applied, pattern pieces 235 which configure the selected garment as illustrated in the screen 230 may be given.

The user may approximately place a plurality of pattern pieces 235 on the screen 230, onto a body part or arrangement points of the avatar displayed on the screen 250 in the same manner as the pattern pieces 255. In this case, the automatic sewing apparatus may acquire placement information including parts corresponding to the pattern pieces 235 and a relative position between the pattern pieces 235 from the screen 250. Here, the parts corresponding to the pattern pieces 235 may correspond to body parts of the avatar, such as a neck, a wrist, an arm, and a bodice or for example, may correspond to parts of the garment draped on the avatar, such as a front bodice, a back bodice, a left sleeve, a right sleeve, and a neck collar.

The placement information according to an example embodiment may include information indicating a matching relationship between the pattern pieces 235 and the placement points 215 of the avatar 211 on which the garment is draped. The placement points 215 refer to a set of points provided to facilitate placing specific patterns in advance near a position to be finally draped. Each placement point 215 may include information indicating a part of the body corresponding to the corresponding placement point. In this case, the information indicating the matching relationship, for example, may include at least one of shapes of the pattern pieces 255, lengths of the pattern pieces 255, placement directions of the pattern pieces 255, placement positions of the pattern pieces 255, a body part of the avatar 211 corresponding to the placement position of the pattern pieces 255, a relative positional relationship between pattern pieces 255, and a tag of the pattern pieces 255.

In this case, the tag of the pattern pieces 255, for example, may be automatically marked by the automatic sewing apparatus or marked by a user, according to the position where the pattern piece is disposed on the avatar 211, a shape of the pattern piece, or the like. For example, the automatic sewing apparatus may automatically mark pattern pieces with tags by predicting a part of the avatar corresponding to the pattern piece from the pattern shape disposed in the avatar. Alternatively, the automatic sewing apparatus may identify shapes of sub parts of the pattern pieces and placement positions of the sub parts according to the placement information to mark every part corresponding to segments of the sub parts with tags.

For example, when the user clicks the corresponding placement points 215 of the avatar after clicking the pattern pieces 235 of the garment, the pattern pieces 235 may be arranged in a correct position of the body part corresponding to the pattern pieces in a placement board (e.g., screen 250). Further, when the user moves a specific pattern piece 235 to a specific placement point 215 by clicking operations, the specific pattern piece moves to the position of the specific placement point. By doing so, the pattern classification may be performed to assign the pattern pieces to every body part. In an example embodiment, the pattern classification may be automatically performed by pattern placement using the placement points of the placement board instead of causing the user to explicitly perform an additional job of pattern classification and a classification result (for example, which pattern pieces belong to which body part) of each pattern piece by the automatic pattern classification may be presented to the user. Pattern pieces not performed with a placement procedure using the placement points may be excluded from the automatic sewing operation.

The automatic sewing apparatus according to an example embodiment may receive, as an input, a plurality of pattern pieces 235 approximately disposed on body parts of the avatar or the arrangement point as shown in screen 250.

FIG. 3 is a diagram illustrating nodes and segments according to an example embodiment. The nodes correspond to a vertex on the outline which represents the shape of the pattern piece, and for example, may correspond to points that are likely to be ending points of the sewing line. Types of the nodes may include, for example, a shape point represented with a black dot, a notch 310, a smooth 320, a corner 330, and the like. The smooth 320 may be a vertex on the segment and/or a straight line of the edge. The corner 330 may correspond to one vertex where edges meet, in each of the sub parts of the pattern piece. The smooth 320 and the corner 330 may be distinguished according to an angle of the edges. For example, if the angle of the edges is greater than a threshold angle (i.e., 165 degrees), it may be classified as the smooth 320, and if the angle of the edges is smaller than the threshold angle, it may be classified as the corner 330. The notch 310 may be determined independently from whether a corresponding outline is the smooth or in a corner. In other words, an arbitrary notch may be a corner or may not be a corner.

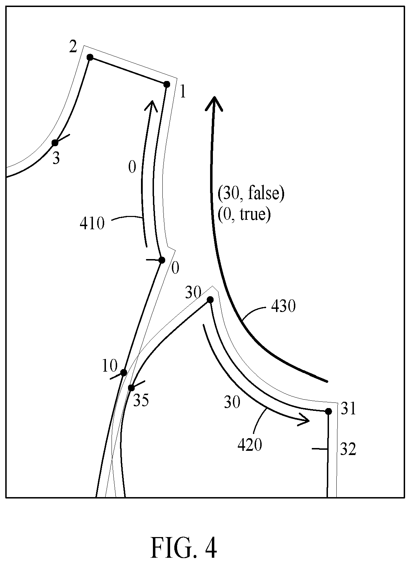

The segment 350 indicates a directed connection between from a starting node to an adjacent ending node. The direction of segment 350 may be defined in advance upon generation or its value may be invariable. For example, when a segment is generated, the direction defined corresponding to the segment is maintained at an unchanged value. More specifically, a segment is a vector with a start node and an end node. The segment is used as a building block that composes the edge, the upper structure, and the edge can decide whether to use the segment's direction as it is or vice versa. As such, since a segment is a building block, the direction of the segment, that is, the direction of the vector, is determined at the time of creation, and the definition does not change until the program is terminated. The segment 350 may correspond to a part of an edge distinguishable, by the node, from the edge of the sub parts. In other words, one edge may be configured by a plurality of segments. As described below in more detail with reference to FIG. 4, an edge may be composed of segments. The edge refers to a part of an outline that connects the pattern pieces. The edge may span over multiple pattern pieces or multiple segments.

The automatic sewing apparatus may divide pattern pieces with respect to a corner 330 type node, rather than the smooth 320 type node, during an initial edge extracting process. Since the node and the segment (or edge) are not initially provided, the automatic sewing apparatus may define the node and the segment (or the edge) in a single pattern piece and then define the node and the segment (or the edge) in multiple pattern pieces through repeated processes.

FIG. 4 is a diagram illustrating segments 410, 420 and an edge 430, according to an example embodiment. The segments 410, 420 are parts of an edge distinguished by different nodes at the edge or the outline of sub parts. For example, the segment 410 may be part of an outline which connects node 0 and node 1, and has a direction from node 0 to node 1. Further, the segment 420 may be part of an outline which connects node 30 and node 31, and has a direction from node 30 to node 31.

The edge 430 may be part of outlines connecting pattern pieces for different body parts. In other words, one edge 430 may be composed of segments 410 and 420. In FIG. 4, (30, false) denoted at the side of the edge 430 indicates that the segment 30 proceeds in a reverse direction (reverse to a default direction, as originally defined). Further, (0, true) in FIG. 4 indicates that segment 0 proceeds in a forward direction in the same direction as the default direction, as originally defined. In summary, {(30, false), (0, true)} at the edge 430 may be understood to indicate that the edge 430 moves along the segment 30 in a reverse direction and then moves along the segment 0 in the forward direction.

As described above, the edge 430 may span over multiple sub parts or multiple pattern pieces. Even though the first edge is present only on a sub part, when the sub parts and/or pattern pieces are merged, the edge may span over the merged sub parts or pattern pieces. For example, when edges are merged, a graph may include a list of information about a merged edge pair (for example, an index of the merged edges or tag information of the merged edges).

Each edge may include a pair of a segment included in the corresponding edge and a directivity of the segment, in other words, edge = ordered list of (segment, direction) pairs.

Assume an example where a sleeve cap and an armhole of a bodice are sewn. Even though a conceptual sewing line may be sewn by matching a pair of a sleeve cap edge and an armhole edge, an actual sewing line may be sewn by matching four pairs of pattern pieces corresponding to the sleeve cap and the armhole. In other words, one bundle obtained by connecting four segments may be an edge, and thus, the number of segments may be larger than the number of edges (the number of segments > the number of edges). As described above, the edge may correspond to a conceptual sewing line or a conceptual sewing unit that is conceived by the user. Since the edge is a conceptual sewing unit, the edge may be defined across multiple pattern pieces.

According to an example embodiment, the problem of sewing line generation may be reduced to the problem of edge matching where the edges correspond to the conceptual sewing line. The process of "matching" as described herein refers to the process of pairing sewable edges to generate an edge pair.

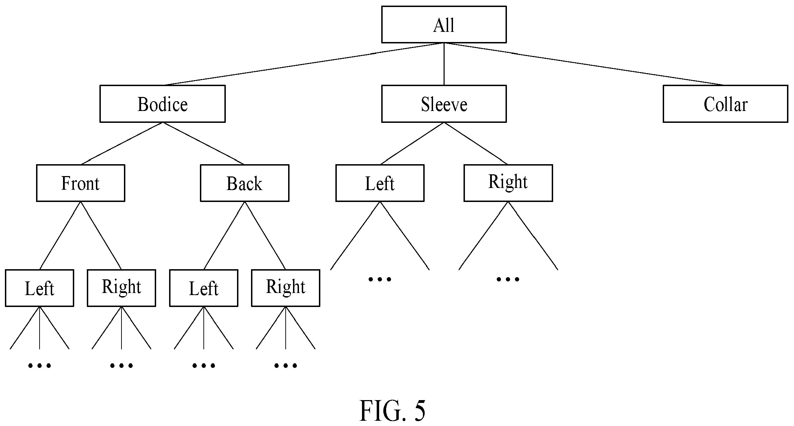

FIG. 5 is a diagram illustrating a method of generating a graph according to an example embodiment. The automatic sewing apparatus according to an example embodiment identifies matchable edge pairs from an initial graph to iteratively update the grape while merging and/or concatenating the edge pairs. The automatic sewing apparatus may perform the task in the unit of sub parts for every body part without matching the edges for the entire pattern pieces from the beginning. This is consistent with the way a person would perceive a garment. That is, a person would recognizes a garment as a collection of pattern pieces or units of body parts and not perceive a garment as a single pattern piece.

Accordingly, the automatic sewing apparatus iteratively merges the graphs to generate a sewing line while matching the pattern pieces made of sub parts individually for every sub part by a bottom-up manner. That is, matching is performed by matching sub parts of pattern pieces for each body part or garment part (corresponding to the lowest level of the graph) and then proceeding to match a higher level of pattern pieces belonging to a different body part or a garment part. As described herein, a "round" or "iteration" refers to a process which is repeated for every part when the graphs are iteratively merged.

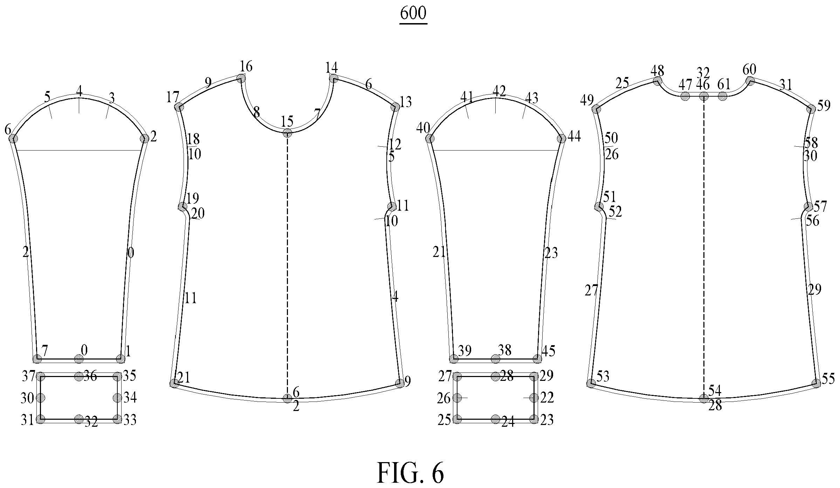

FIG. 6 is a diagram illustrating a graph 600 that covers the entire automatic sewing process, according to an example embodiment. The graph 600 is composed of nodes 17, 16, 14, 13, 40, 44, and edges 2, 4, 6, 7, 8, 9, 10, 11, 21, 23 (at center points of the corresponding edges). As illustrated in FIG. 6, six pattern pieces are shown with respective nodes and edges.

The automatic sewing apparatus may identify edges of the sub parts, based on the graph and the placement information of the pattern pieces received during the pre-processing process. For example, when a current round processes a right sleeve, the automatic sewing apparatus may extract all edges of the right sleeve and form a candidate edge set. The automatic sewing apparatus may extract a candidate edge pair set that includes a pair of edges, and determine matching edge pairs that satisfy certain conditions from the candidate edge pair set.

FIG. 7 is a diagram illustrates a bodice pattern piece 710 with a normal sleeve and a bodice pattern piece 730 with a raglan sleeve, according to an example embodiment. The pattern pieces have dependency for every sub part and are not completely independently processed from each other. For example, as illustrated in FIG. 7, in the bodice pattern piece 710, a shoulder and an armhole part are clearly distinguished so that the bodice pattern piece may correspond to a bodice of a garment having a normal sleeve. In contrast, in the bodice pattern piece 730, a shoulder and an armhole part are not clearly distinguished so that the bodice pattern piece 730 may correspond to a bodice of a garment having a raglan sleeve. Accordingly, when the sleeve is a normal sleeve, it is attached with the bodice pattern piece 710 while when the sleeve is a raglan sleeve, it is attached to the bodice pattern piece 730.

The "dependency" may be understood to mean that a shape of the bodice pattern piece sewn with each sleeve may vary according to the shape of the sleeve, and a pattern piece fitted with the corresponding piece may vary according to the shape of the pattern piece. Accordingly, the automatic sewing apparatus may identify whether the sleeve is a raglan sleeve or a normal sleeve prior to determining a process of determining the sewing lines. The sequence of performing matching between pattern pieces may be predetermined.

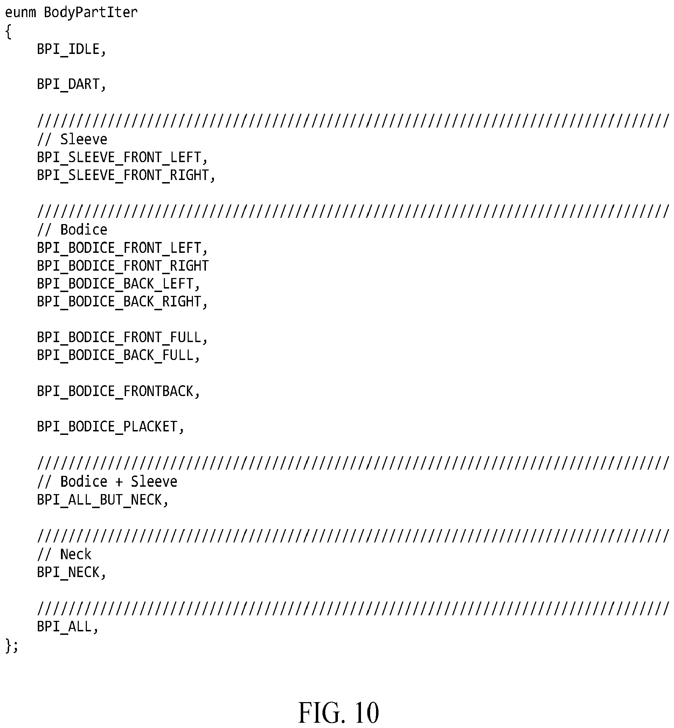

FIG. 8 is a flowchart illustrating a method of generating sewing lines, according to an example embodiment. The automatic sewing apparatus may sequentially match 810 edges corresponding to areas to be sewn with each other in the pattern pieces in the sequence of matching operations based on the placement information and the graph. The process of sequentially matching the edges by the automatic sewing apparatus will be described in detail with reference to FIGS. 9 and 10 below.

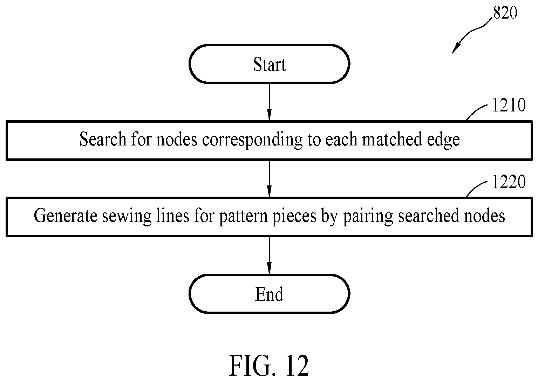

The automatic sewing apparatus may convert 820 edges matched in operation 810 into a sewing line for the pattern pieces. The process of converting the matched edges into the sewing line for the pattern pieces by the automatic sewing apparatus will be described in detail with reference to FIG. 12 below.

FIG. 9 is a flowchart illustrating a method of sequentially matching edges according to an example embodiment. The automatic sewing apparatus may extract 910 all edges belonging to the pattern pieces, based on the placement information, to form a candidate edge set E.

The automatic sewing apparatus may extract 920 a candidate edge pair set P including edge pairs (for example, (e1, e2)) that match from all edges included in the candidate edge set E where P = {(e1, e2) | e1, e2 ∈ E, e1 # e2}.

The automatic sewing apparatus may match 930 edge pairs based on a matching cost of the edge pairs included in the candidate edge pair set P. The process involves determining whether all elements of the candidate edge pair set P can match. Then, a subset of edge pairs that satisfy certain conditions (e.g., minimizes matching cost) is selected. The matching cost may be calculated in advance by mergeability as determined based on at least one of tags corresponding to each of edges that form an edge pair and a characteristic of each of edges that form the edge pair.

The "mergeability" indicates whether a pattern piece is mergeable. For example, each pattern piece may be classified into "definitely mergeable", "possibly mergeable" or "definitely not mergeable." When a loop is not to be formed by partial pattern pieces, merging is not possible between edge pairs that would generate a loop as a result of the merging, and hence, the mergeability of the corresponding edge pairs is set to "definitely not mergeable".

The loop of the mergeability loop is about the topology of the garment created as a result of merging. More specifically, all patterns before starting sewing have the same phase as a flat plate-shaped disk. When the patterns are sewn to each other as the automatic sewing is in progress, the phases change, and they may no longer be a disk but a different shape. For example, in the case of a sleeve pattern, initially it is a flat plate, but when the left and right edges of the sleeve are sewn together, it becomes a cylinder shape. In other words, the phase that was originally 'a disk without holes' is changed to 'a disk with a hole in the middle'.

For each iteration round, whether or not the above-described phase change may be allowed may be determined differently. For example, a phase change is allowed in a round that handles the sleeves, whereas a phase change is not allowed in a round that handles the left side of the body plate. That is, the loop of the mergeability refers to a hole created when the topology of the resulting garment is changed, and whether to allow the loop can be understood as whether to allow the phase change.

The matching cost may be calculated in advance based on at least one of a length ratio between edges that form an edge pair, the total length of edges that form the edge pair, the directions of normal vectors of the edges that form the edge pair, and a distance between the edges that form the edge pair. The matching cost may be calculated to be lower as the length ratio between edges is closer to 1. As the total length of the edges is larger, the matching cost is calculated to be lower. As the normal vectors of the edges are closer to being opposite in terms of their directions, the matching cost is calculated to be lower. Alternatively, as the distance between the edges is closer, the matching cost may be calculated to be lower. In this case, the direction of the normal vector of the edges may be considered only for the edge in the same part.

The matching cost of the edge pair whose mergeability is "definitely mergeable" is calculated to be the lowest, the matching cost of the edge pair whose mergeability is "possibly mergeable" is calculated to be high, and the matching cost of the edge pair whose mergeability is "definitely not mergeable" is calculated to be the highest. According to an example embodiment, the automatic sewing apparatus assigns a matching cost which is higher than a threshold cost corresponding to an iteration ending condition to the edge pair whose mergeability is classified to be "definitely not mergeable" to set the iteration of the matching process to be end as soon as the matching with the corresponding edge pair is tried.

Matching 930 edge pairs may involve matching the edge pair of the lowest matching cost first followed by the edge pairs of next lowest matching costs in sequence. The automatic sewing apparatus may perform the matching of the edge pairs until there is no more edge pair to be matched. The automatic sewing apparatus may compare a matching cost of the edge pairs included in the candidate edge pair set and a predetermined threshold (for example, a threshold cost) and end the matching between edge pairs when the matching cost exceeds the threshold.

Matching edge pairs by the automatic sewing apparatus may be performed by the following processes:
A. The automatic sewing apparatus registers candidate edge pairs in a minimum heap (min heap) with the matching cost as a key value to call a candidate edge pair (e0, e1) having the lowest matching cost from the heap in every step. In this case, when the matching cost of the candidate edge pairs exceeds a predetermined limit, the automatic sewing apparatus may end the operation.
B. When the edge 01 or the edge e1 includes a merged segment or cannot be merged, the automatic sewing apparatus may discard the corresponding edge pair and call a new candidate edge pair having a next lower matching cost from the heap.
C. When the edge e0 and the edge e1 do not correspond to above B, the automatic sewing apparatus may merge the candidate edge pair (e0, e1). As the candidate edge pair (e0, e1) is merged, the automatic sewing apparatus may change all segments included in the edge e0 and the edge e1 to a "merged" state.
D. The automatic sewing apparatus may concatenate edges which are connected to both ends of edge e0 and edge e1, if necessary. In this case, the automatic sewing apparatus may concatenate up to two edges connected to both ends of each edge.
E. The automatic sewing apparatus may calculate the matching cost between newly generated edges and existing edges to insert the matching cost in the heap.

The automatic sewing apparatus may validate 940 the matching result between edge pairs. For example, the automatic sewing apparatus may validate the matching result based on whether edge pairs according to the matching results yield a shape expected for every part of the garment.

When the iterative edge matching process at every round (in other words, when edges are matched for every body part) ends, there may be a specific form or shape expected for every part of the garment. For example, when a part of the garment is a sleeve, a final shape needs to have a vertical cylinder shape. That is, some of the edges that form a side surface are merged to disappear from the candidate edge set and edges remaining in the candidate edge set without being merged may form two disjointed loops. In this case, an upper loop may be a sleeve cap of a sleeve later.

Alternatively, when the part of the garment is a bodice, two armhole loops are generated, and neck and waist loops are separately generated or are connected to form one long loop. In this case, whether the neck and waist loops are separately generated or one long loop is generated may be determined depending on whether a front surface of the garment is open.

The automatic sewing apparatus may validate the matched edge pairs by determining whether a shape of the garment or part of the garment, as expected, when the matched edge pair is used as a sewing line. During validation, when the matching edge pairs results in a shape different from the expected shape, the automatic sewing apparatus determines that the iterative matching process of the sub part has failed and ends the operation. In this case, the automatic sewing apparatus may convert the matched edge pairs calculated so until this point into the sewing lines for the pattern pieces.

The automatic sewing apparatus may mark 950 the remaining edges excluding the matched edge pairs with tags based on the validation result. The automatic sewing apparatus may mark every validated edge pairs (e.g., edge pairs that yield an expected shape) with tags corresponding to the expected shape. For example, when an edge is tagged with "front shoulder," the corresponding edge may be merged with an edge tagged with "back shoulder" but not merged with the remaining edges.

As described above, the tag may be used to define the mergeability of the corresponding edges. For example, when a cylinder is created by matching the edge pairs, the automatic sewing apparatus may divide the candidate edge set into two disjointed groups of an upper loop and a lower loop. When the sleeve candidate edge set corresponds to a raglan sleeve, a position of a shoulder sewing line may be different from that of the normal sleeve. In other words, generally, in the normal sleeve, an arm part is sewn to the bodice near the shoulder, but in the raglan sleeve, an arm part is sewn near a neck collar. As described above, the sewing point may vary depending on the type of sleeves such as whether the sleeve candidate edge set is a raglan sleeve or a normal sleeve. Accordingly, the automatic sewing apparatus may identify whether the sleeve candidate edge set is a raglan sleeve or a normal sleeve by matching edges belonging to a sleeve candidate edge set first.

The automatic sewing apparatus may identify whether a sleeve is a raglan sleeve as follows. The automatic sewing apparatus may select two topmost nodes from end node set of edges classified as a top group. When two selected nodes are separated, are sufficiently acute, and the position of two selected nodes is higher than a position of the sidemost nodes, the automatic sewing apparatus may determine the sleeve corresponding to the edges as a raglan sleeve.

For example, when the sleeve candidate edge set is determined as a raglan sleeve, the automatic sewing apparatus may mark a tag "SET_SLEEVETOP_NECK" to a concave edge interposed between two topmost nodes and mark a tag "SET_SLEEVETOP" to the remaining edges of the upper loop excluding the concave edge, among the edge belonging to the top group. Further, the automatic sewing apparatus may mark a tag "SLEEVE BOTTOM" to edges of the lower loop. When the edges tagged with 'SLEEVETOP_NECK' and 'SLEEVETOP" are multiple pattern pieces, the automatic sewing apparatus may connect all the pattern pieces to make one pattern piece. Conversely, when the sleeve candidate edge set is determined as a normal sleeve rather than the raglan sleeve, the automatic sewing apparatus may mark a tag "SET_SLEEVETOP" to all the edges classified as the top group.

FIG. 10 is a diagram illustrating a program coding representing a matching order according to an example embodiment. The automatic sewing apparatus according to an example embodiment matches pattern pieces according to a predetermined matching order as described above and determines a candidate edge set including an edge pair to be matched among edges extracted at every round. The automatic sewing apparatus confirms (or validates) whether a result of matching edge pairs included in the candidate edge set is normal based on the matching cost of the edge pairs and then marks a tag corresponding to the matched edge pairs.

The matching order may be, for example, an order of a sleeve -> a bodice -> a collar. For example, when the sleeve candidate edge set corresponds to a raglan sleeve, a position of the shoulder sewing line may be different from that of the normal sleeve. In other words, generally, in the normal sleeve, an arm part is sewn to the bodice near the shoulder, but in the raglan sleeve, an arm part is sewn near a neck collar. As described above, the sewing point may vary depending on a type of sleeve such as whether the sleeve candidate edge set is a raglan sleeve or a normal sleeve. Accordingly, the automatic sewing apparatus may identify whether the sleeve candidate edge set is a raglan sleeve or a normal sleeve by matching edges belonging to a sleeve candidate edge set first.

Then, the automatic sewing apparatus may match edge pairs included in a candidate edge set of a front bodice and a candidate edge set of a back bodice after matching edge pairs included in candidate edge sets of left and right bodices corresponding to a front side and/or a back side. When there is a placket where a part of a side is open, the placket may be implemented after matching the edge pairs included in the candidate edge sets of the front and back bodice,.

After merging the candidate edge set of the sleeve and the candidate edge set of the bodice, the automatic sewing apparatus may match the edge pair included in a collar candidate edge set to the merged result. For example, the feature for the neck part in the garment may be finally identified only when the bodice part is completed, like a length of a neck part and a shape of the neck part in the candidate edge set of the bodice. Accordingly, the automatic sewing apparatus may finally match the candidate edge set of the collar after concatenating the candidate edge set of the sleeve and the candidate edge set of the bodice.

For example, the automatic sewing apparatus may perform the matching in consideration of a predetermined sewing rule as follows.
i) Each pattern piece corresponding to each body part is sewn while maintaining a specific shape to be sewn. For example, when the sleeve pattern piece has a vertical cylinder shape, the pattern pieces of the sleeve pattern pieces may be divided into two disjointed sets including a top and a bottom. In this case, upper and lower pattern pieces of the sleeve may be sewn with pattern pieces of different parts. The upper pattern piece of the sleeve may become a sleeve cap to be sewn with a bodice pattern piece. Further, the lower pattern piece of the sleeve may be sewn with a wrist banding or a cuff pattern piece.
   Further, the bodice pattern piece is divided into three disjointed sets including a front left, a front right, and a back or into four disjoint sets including a front left, a front right, a back top, and a back bottom. In this case, three or four disjoint sets may also be sewn with pattern pieces of different parts.
ii) Pattern pieces belonging to different pattern pieces are not to be sewn with each other except for a part corresponding to an outline between pattern pieces. For example, in the case of the sleeve pattern piece and the bodice pattern piece, only a combination of the sleeve top and the armhole can be sewn. Further, between the front bodice pattern piece and the back bodice pattern piece, only the shoulder and the side are sewn, but the other parts are not sewn. In addition, between the front left bodice pattern piece and the front right bodice pattern piece, only center lines are sewn, but the other parts are not sewn.
iii) When a sewing shape of the specific pattern piece cannot be determined only with information of the pattern piece itself, the other pattern piece to be merged with the corresponding pattern piece needs to be processed first. For example, in the case of the collar pattern piece, only when a position of the neck part is identified first from the bodice pattern piece, it is determined which part of the bodice pattern piece is sewn with the collar pattern piece.

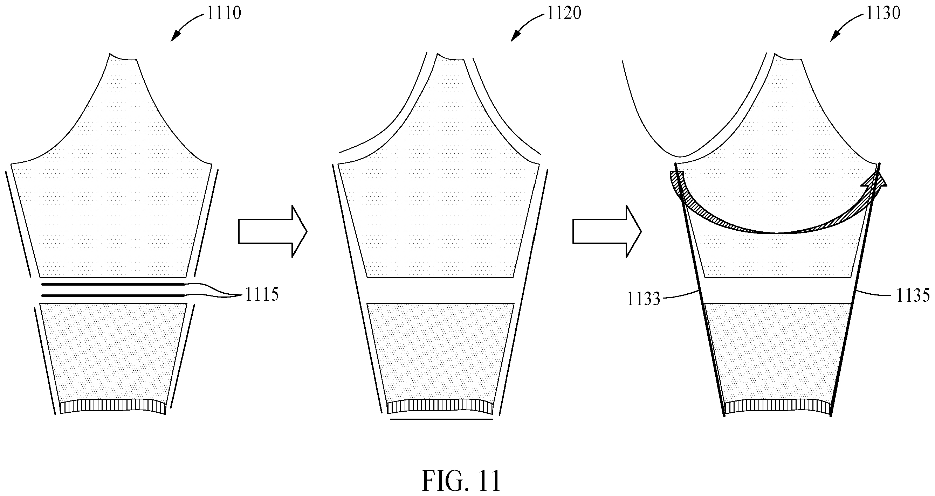

FIG. 11 is a diagram illustrating a process of generating a new edge according to an example embodiment. The automatic sewing apparatus may merge the graph in response to the edge pairs matched by the above-described process of FIG. 10. The automatic sewing apparatus concatenates the segments corresponding to the merged graph to generate a new edge.

The automatic sewing apparatus may calculate the matching costs of all pairs for the edge pairs included in n candidate edge sets acquired in the previous process, in advance. The automatic sewing apparatus may perform the matching of the edge pairs with lowest matching costs first and highest matching costs later until there is no more edge pair to be matched. When the automatic sewing apparatus meets an edge pair whose matching cost exceeds a predetermined threshold, the automatic sewing apparatus may end the matching.

For example, in figure 1110, when the matching cost of the edge pairs 1115 is the lowest, the automatic sewing apparatus may match the edge pairs 1115. The automatic sewing apparatus may merge the matched edge pairs on the graph as illustrated in the figure 1120. In this case, the edge pairs are merged as illustrated in the figure 1120 to generate new edges 1133 and 1135 which do not exist in the past as illustrated in the figure 1130.

FIG. 12 is a flowchart illustrating a method of converting matched edges into a sewing line for pattern pieces according to an example embodiment. The automatic sewing apparatus may search 1210 for nodes corresponding to each of matched edges. The automatic sewing apparatus searches for nodes corresponding matched edges that include a starting node corresponding to a starting point of the matched edges, an ending node corresponding to an ending point of the matched nodes, and internal nodes located between the starting node and the ending node.

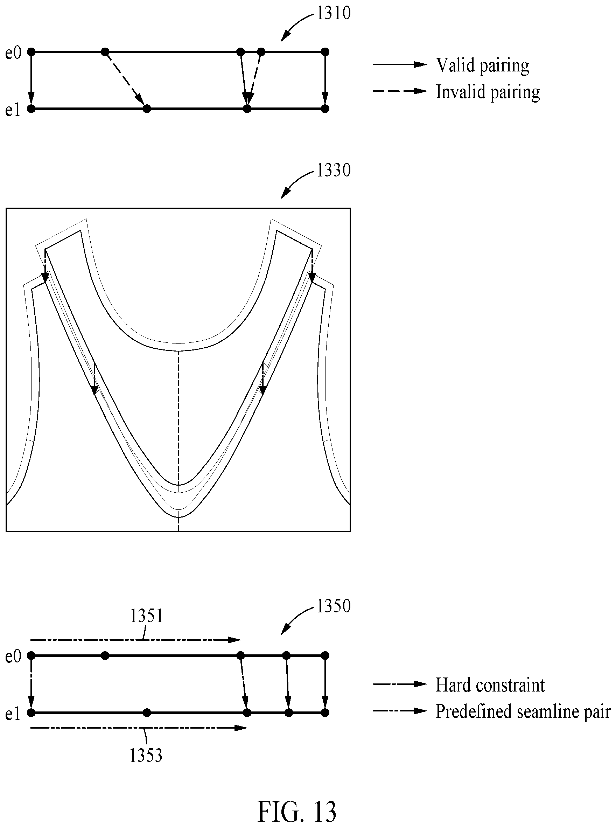

The automatic sewing apparatus may generate 1220 sewing lines for the pattern pieces by pairing the searched nodes. The "pairing" may be understood as matching between internal nodes in an edge pair which has been determined to be sewn. The automatic sewing apparatus determines whether there is a loop between the starting point and the ending point among the internal nodes and generates the sewing lines by pairing the nodes using different methods depending on whether there is a loop. The method of pairing the nodes by the automatic sewing apparatus will be described in detail with reference to FIG. 13 below.

FIG. 13 is a diagram illustrating a method of pairing nodes, according to an example embodiment. Referring to FIG. 13, figures 1310 and 1330 describe a method of pairing nodes when the matched edge pair according to the example embodiment corresponds to non-loop edges, and a figure 1350 describe a method of pairing nodes when automatic sewing is attempted when there is a sewing line directly created by the user in advance. As described above, since the matched edge pairs correspond to a conceptual sewing line so that it needs to be converted into an actual sewing line. For example, the automatic sewing apparatus may convert the conceptual sewing line into the actual sewing line by materializing the matched edge pair (e0, e1) to the matching between (internal) nodes which configure each edge. The automatic sewing apparatus may identify whether there is a loop between the starting point and the ending point of the edges. The automatic sewing apparatus may identify non-loop edges and loop edges according to the merging result by means of the matching process between the nodes and the edges as described above.

When the matched edge pairs correspond to the non-loop edges, the starting point and the ending point of the sewing may be clearly fixed. The "non-loop edges" may be understood as edges that are spaced apart from each other so that one loop cannot be formed or edges in which the starting point and the ending point of the edges are merged with different points. For example, when the matched edge pair in the figure 1310 or 1330 corresponds to the non-loop edges, the automatic sewing apparatus may set the starting point of two edges (e0, e1) as 0 and set the ending point as 1 and align the remaining internal nodes in the order of a normalized length α.

The automatic sewing apparatus finds internal nodes having the most similar normalized length α from internal nodes of the opposite edge for each internal node to pair both nodes. In this case, when a difference between the normalized lengths α of the pared internal nodes is larger than a predetermined reference or any one internal node is already paired with another node, the automatic sewing apparatus may discard the corresponding node.

In contrast, when the matched edge pair corresponds to loop edges, the starting point and the ending point of the sewing may not be clear. The "loop edges" may be understood as edges that are connected to each other to form a loop or edges in which the starting point and the ending point of the edges are merged with the same point.

For example, when it is determined that there is a loop between the starting point and the ending point of the edges, the automatic sewing apparatus may perform pairing between nodes by setting each of the nodes as a starting point. The automatic sewing apparatus may generate sewing lines for pattern pieces based on a pairing score according to the pairing between nodes. Here, the pairing score may be set by the same way as the matching cost.

To be more specific, when the matched edge pair corresponds to the loop edges, the starting point of the loop edges is not clear. Accordingly, the automatic sewing apparatus may attempt the pairing between (internal) nodes by setting all the nodes as a starting point. The automatic sewing apparatus calculates pairing scores of the nodes that are attempted for pairing and finally pairs nodes having the highest pairing score. For example, the smaller the normalized length α between two nodes, the pairing scores can be calculated with a higher score. The automatic sewing apparatus may differentiate the pairing score for every type of nodes. For example, the automatic sewing apparatus may differentiate the pairing scores in the sequence of a notch node, a corner node, and a non-corner node (a notch node > a corner node > a non-corner node).

The automatic sewing apparatus may pair the nodes having the highest pairing scores among n pairing scores. In contrast, when it is determined that there is no loop between the starting point and the ending pint of the edges, the automatic sewing apparatus may align the internal nodes in the order of normalized length α. The automatic sewing apparatus may generate sewing lines for the pattern pieces by pairing an internal node of the opposite edge to be matched and an internal node of the most adjacent edge, among the aligned internal node.

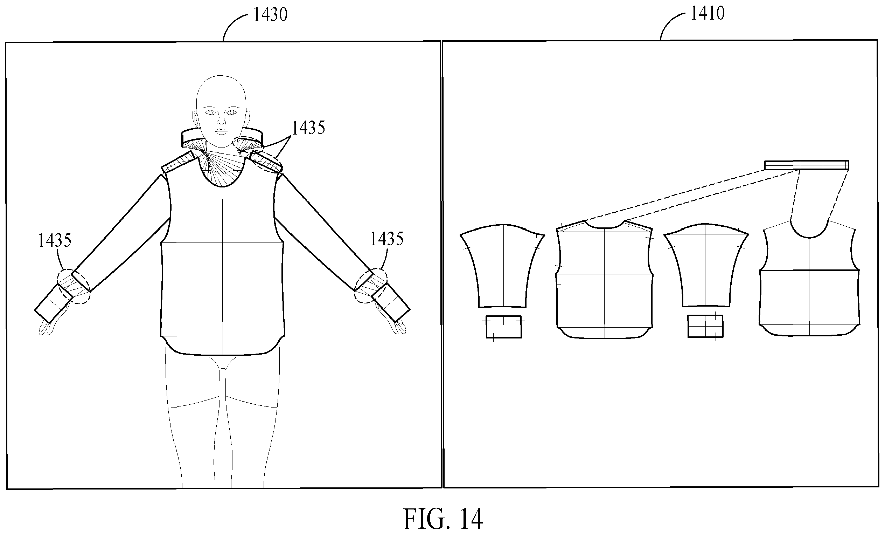

The result of generating the sewing line for the pattern pieces by the automatic sewing apparatus will be illustrated in FIG. 14 below. According to an example embodiment, when there is a sewing line directly created by the user in advance (e.g., existing sewing lines 1351 and 1353 denoted by a double-dashed arrow in the figure 1350), the automatic sewing apparatus may perform the automatic sewing by the following method.

The automatic sewing apparatus merely marks that the existing sewing lines 1351, 1353, and pairs the nodes by the above-described pairing process to convert the paired nodes into a sewing line. For example, after storing a node pair which pairs the starting point and the ending point of the corresponding sewing pair of the existing sewing lines 1351, 1353 in advance, the automatic sewing apparatus may mark that it is an edge related to the existing sewing line on the segments which configure edges including the corresponding nodes. When the internal nodes are matched during the process of converting the paired nodes into the sewing line, the automatic sewing apparatus forcibly pairs the previously stored node pairs marked with a single dashed arrow. This may be called "hard constraint".

The solid-line arrow marked in the figure 1350 may correspond to a part of a final result acquired by performing node pairing.

In addition to the above-described example embodiments, the automatic sewing apparatus may perform additional processing for various garment features that may be frequently encountered in commercial garments.

In the above-described automatic sewing method, a segment which is once marked in a "merged" state and an edge including the segment which is marked in a "merged' state are excluded from the matching target so that two or more sewing lines are not formed on the same position. However, two or more sewing lines may be frequently generated in one segment due to, for example, banding, a henry neck, pleats, and a layered pattern. Accordingly, after detecting a characteristic of the pattern pieces in which two or more sewing lines are generated in one segment, the automatic sewing apparatus may generate two or more sewing lines in one segment by secondarily generating a sewing line by the post-processing.

For example, when the pattern piece corresponds to a banding which has a rectangular pattern long in a horizontal direction and includes a horizontal internal segment in the middle, the automatic sewing apparatus may sew the top and the bottom by assuming that the pattern is a pattern folded with respect to the internal segment in the horizontal direction. Alternatively, when the pattern piece corresponds to pleats in which a user sets a folding angle for folded lines, the automatic sewing apparatus performs a similar treatment to a dart on a part to be a folded part and separately adds a sewing line to be added to overlap thereon finally by the post-processing.

Alternatively, for example, when the pattern piece corresponds to one pair of plackets which are much shorter than the bodice vertical length, the automatic sewing apparatus considers the corresponding garment as a henry neck shirt to forcibly sew a bottom part of the corresponding placket two times during the validation process of a round (= SET BODICE PLACKET) of processing the placket.

In addition, when the pattern piece includes a vent corresponding to an edge which should not be sewn, the automatic sewing apparatus detects the corresponding shape (for example, a vent shape) during the graph generating process. When the vent shape is detected, the automatic sewing apparatus may not perform the sewing by marking a tag for the corresponding pattern piece as a vent. When there is an internal segment on an extending line of a specific edge of a pattern piece tagged as a vent and there is a U-shaped uneven shape with respect to the corresponding inner segment, the automatic sewing apparatus treats the edges of the U shaped part as a vent and does not sew the corresponding edges.

FIG. 14 is a diagram illustrating a result of a sewing line for pattern pieces generated by an automatic sewing apparatus according to an example embodiment. Referring to FIG. 14, a screen 1410 displaying pattern pieces which configure the garment according to the example embodiment and a screen 1430 displaying a sewing line corresponding to the pattern pieces illustrated in the screen 1410 are illustrated.

The automatic sewing apparatus matches the edges based on the placement information of the pattern pieces illustrated in the screen 1410 and the graph corresponding to the pattern pieces to generate sewing lines 1435 corresponding to the pattern pieces as displayed in the screen 1430.

Further, the automatic sewing apparatus sews the pattern pieces along the sewing lines 1435 illustrated in the screen 1430 to drape the garment 1530 configured by the sewn pattern pieces on the avatar 1510 as illustrated in FIG. 15 below.

In general, a patterner that produces the pattern and a designer who completes the final outfit using the produced pattern are separated. If the pattern generation process is regarded as a separate process, sewing is the most difficult and specialized knowledge required in making virtual clothes. Sewing is a complex task that is difficult for ordinary people who do not understand the structure of the garment, and it takes considerable time and is easy to be mistaken even for experts.

The embodiments increase the work efficiency of the existing expert group by automating the sewing process, and significantly lower the threshold for virtual clothing production even for ordinary people who do not have knowledge about the structure of the clothing, so as to provide techniques to complete their clothes.

Existing studies related to automatic sewing of virtual clothes have clear limitations, such as operating only for extremely limited types of clothes, or simply matching line segments of similar length by excluding information on the structure of the clothes.

The embodiments introduce a bottom-up construction process in which detailed parts are completed based on the process of actually making a garment. Due to this, compared to the method of simply pairing all line segments by length unit, it is possible to efficiently filter out matches that may become false-positive in advance and improve accuracy and efficiency. The automatic sewing apparatus according to an embodiment considers the garment as a collection of sub-parts using a bottom-up construction scheme considering the morphological characteristics of the garment, so that inter-part sewing that does not need to be considered during automatic sewing (i.e., left and right sleeves) can be filtered out in advance.

In addition, embodiments introduce a concept of an edge that clearly corresponds to a sewing line in the user's concept, and a method in which new candidate edges are continuously generated as edge matching proceeds. Due to this, the embodiments can accurately detect even matchings that were difficult to detect in the conventional method, which was simply based on the length of the line segment.

In addition, the embodiments introduce the concept of an edge that clearly corresponds to the sewing line in the user's concept, and as edge matching proceeds, new candidate edges are continuously generated. Even matching, which was difficult to detect, can be accurately detected. The automatic sewing apparatus according to an embodiment uses an edge matching instead of line segment matching to correspond conceptual features such as shoulder line, sleeve end, armhole, and neckline to the edge, and define the matching between the conceptual features as sewing. Furthermore, since concatenated edges are given as new input through the iterative refinement of the automatic sewing process, even sewing lines that cannot be processed with a 1-pass algorithm can be processed.

FIG. 15 is a diagram illustrating a result that a garment configured by pattern pieces sewn along a sewing line generated by an automatic sewing apparatus according an example embodiment is draped on an avatar. Referring to FIG. 15, a screen 1500 on which an avatar 1510 which drapes the garment 1530 configured by the pattern pieces sewn along the sewing lines illustrated in FIG. 14 according to an example embodiment is simulated is illustrated.

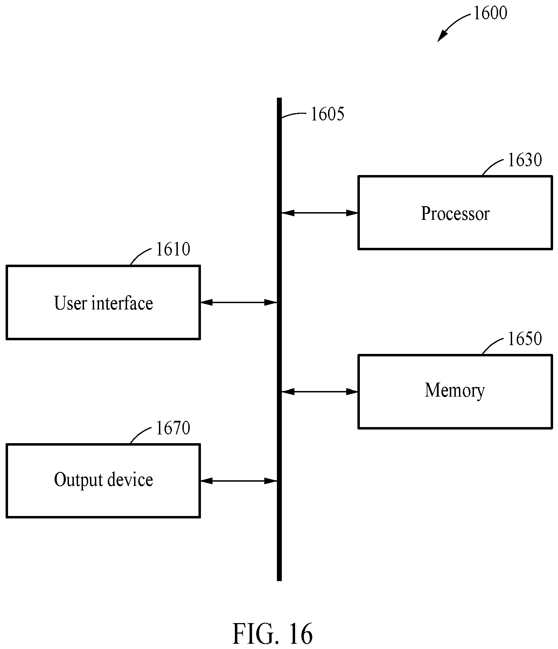

FIG. 16 is a block diagram of an automatic sewing apparatus according to an example embodiment. Referring to FIG. 16, an automatic sewing apparatus 1600 according to an example embodiment includes a user interface 1610 and a processor 1630. The automatic sewing apparatus 1600 may further include a memory 1650 and an output device 1670. The user interface 1610, the processor 1630, the memory 1650, and the output device 1670 may communicate with each other via a communication bus 1605.

The user interface 1610 acquires placement information of pattern pieces which form a garment.

The processor 1630 generates a graph including nodes located on an outline of the pattern pieces and segments having a directivity connecting adjacent nodes. The processor 1630 matches edges corresponding to areas to be sewn with each other in the pattern pieces, based on the placement information and the graph to generate sewing lines for pattern pieces.

The memory 1650 may store the placement information of the pattern pieces acquired by means of the user interface 1610. The memory 1650 may store the graph generated by the processor 1630. Further, the memory 1650 may store information about edges matched by the processor 1630 and/or information about the pattern pieces for which the sewing lines are generated. In addition, the memory 1650 may store a garment configured by the pattern pieces sewn along the sewing line and a simulation result that the garment is draped on the avatar.

The output device 1670 displays pattern pieces with a sewing line configured by the processor 1630, a virtual garment configured by the pattern pieces sewn along the sewing line, and/or a three-dimensional avatar which drapes the virtual garment. The output device 1670 may output the pattern pieces with sewing lines, a virtual garment on which the pattern pieces are sewn and/or a three-dimensional avatar which drapes the virtual garment on a screen or output the pattern pieces on which the sewing line is displayed, on a paper or a fabric.

The output device 1670 may be a display or a communication interface which communicates with an outside of the automatic sewing apparatus 1600.

Alternatively, the processor 1630 may perform at least one method described above with reference to FIGS. 1 to 15 or an algorithm corresponding to at least one method. The processor 1630 may be a data processing device which is implemented by hardware having a circuit having a physical structure for executing desired operations. For example, the desired operations may include codes or instructions included in the program. The processor 1630 may be configured, for example, by a central processing unit (CPU), a graphics processing unit (GPU), or a neural network processing unit (NPU). For example, the automatic sewing apparatus 1600 implemented by hardware may include a microprocessor, a central processing unit, a processor core, a multi-core processor, a multiprocessor, an application-specific integrated circuit (ASIC), and a field programmable gate array (FPGA).

The processor 1630 may execute a program and control the automatic sewing apparatus 1600. Program codes executed by the processor 1630 may be stored in the memory 1650.

The memory 1650 may store various information generated during the above-described processing process of the processor 1630. In addition, the memory 1650 may store various data and programs. The memory 1650 may include a volatile memory or a nonvolatile memory. The memory 1650 may include a large capacity storage medium such as a hard disk to store various data.

The method according to the example embodiment may be implemented as a program command which may be executed by various computers to be recorded in a computer readable medium. The computer readable medium may include solely a program command, a data file, and a data structure or a combination thereof. The program instruction recorded in the medium may be specifically designed or constructed for the example embodiment or known to those skilled in the art of a computer software to be used. Examples of the computer readable recording medium include magnetic media such as a hard disk, a floppy disk, or a magnetic tape, optical media such as a CD-ROM or a DVD, magneto-optical media such as a floptical disk, and a hardware device which is specifically configured to store and execute the program command such as a ROM, a RAM, and a flash memory. Examples of the program command include not only a machine language code which is created by a compiler but also a high level language code which may be executed by a computer using an interpreter. The hardware device may operate as one or more software modules in order to perform the operation of the example embodiment and vice versa.

The software may include a computer program, a code, an instruction, or a combination of one or more of them and configure the processing device to be operated as desired or independently or collectively command the processing device. The software and/or data may be permanently or temporarily embodied in an arbitrary type of machine, component, physical device, virtual equipment, computer storage medium, or device, or signal wave to be transmitted to be interpreted by a processing device or provide command or data to the processing device. The software may be distributed on a computer system connected through a network to be stored or executed in a distributed manner. The software and data may be stored in one or more computer readable recording media.

As described above, although example embodiments have been described by limited drawings, those skilled in the art may apply various technical modifications and changes based on the above description. For example, even when the above-described techniques are performed by different order from the described method and/or components such as systems, structures, devices, or circuits described above are coupled or combined in a different manner from the described method or replaced or substituted with other components or equivalents, the appropriate results can be achieved.

Therefore, other implements, other embodiments, and equivalents to the claims are within the scope of the following claims.

## Claims

1. A computer-implemented method of determining sewing lines for sewing pattern pieces combined to form a garment, comprising:
receiving (110) placement information of at least a subset of pattern pieces (235, 255), the placement information indicating at least matching relationships between at least the subset of the pattern pieces (235, 255) and placement points (215) of an avatar (211) onto which the garment (1530) is draped;
generating (120) a graph comprising nodes (310, 320, 330) and segments (350, 410, 420), the nodes (310, 320, 330) located on outlines of the pattern pieces (235, 255), each of the segments (350, 410, 420) indicating a directed connection between adjacent ones of the nodes (310, 320, 330); and
determining (130) matching edges (430) of at least the subset of the pattern pieces (235, 255) identified by the placement information as the sewing lines for at least the subset of the pattern pieces (235, 255) using the graph that comprises the nodes (310, 320, 330) and the segments (350, 410, 420), an edge (430) representing an area in one of the pattern pieces (235, 255) to be sewn with another one of the pattern pieces (235, 255) and including at least one of the segments (350, 410, 420),
the method being **characterized in that** the matching edges included in a candidate edge set are matched based on a matching cost of edge pairs that match each other in response to areas sewn together in the pattern piece.

2. The method of claim 1, wherein generating the graph comprises:
extracting, from points on the outlines of at least the subset of the pattern pieces (235, 255), a corner point at which portions of an outline intersect with an angle that is larger than a predetermined reference angle;
extracting, from the points on the outlines of at least the subset of the pattern pieces (235, 255), a notch corresponding to a point where a notch mark is located;
setting the corner point and the notch as nodes (310, 320, 330);
setting a line connecting two adjacent ones of the nodes (310, 320, 330) as one of the segments (350, 410, 420); and
including, in the graph, the nodes (310, 320, 330) and the segments (350, 410, 420).

3. The method of claim 1, wherein each of the edges (430) comprises (i) a pair of the segments (350, 410, 420) in an edge and (ii) directions of the segments (350, 410, 420).

4. The method of claim 1, wherein determining the matching edges comprises:
sequentially matching edges (430) corresponding to areas of at least the subset of pattern pieces (235, 255) to be sewn based on a matching order set according to the placement information and the graph; and
converting the matched edges (430) into the sewing lines for the pattern pieces (235, 255).

5. The method of claim 4, wherein the sequentially matching of the edges comprises:
configuring a candidate edge set by extracting edges (430) of each of the pattern pieces (235, 255) based on the placement information;
extracting the candidate edge pair sets comprising matched edge pairs from the edges (430);
matching the edge pairs based on the matching cost of the edge pairs included in the candidate edge pair set;
validating a matching result between the edge pairs to generate a validation result; and
marking remaining edges other than the matched edge pairs with a tag indicating a shape expected for a part of the garment (1530), based on the validation result.

6. The method of claim 5, wherein the matching cost is calculated according to mergeability of the edges (430) as determined by at least one of (i) a tag indicating each of edges that form an edge pair, and (ii) a characteristic of each of the edges that form the edge pair.

7. The method of claim 5, wherein the matching cost is calculated in advance based on at least one of a length ratio between edges (430) that form an edge pair, a total length of the edges that form the edge pair, directions of normal vectors of the edges that form the edge pair, and a distance between edges which configure the edge pair.

8. The method of claim 5, wherein the matching of the edge pairs comprises:
sequentially matching the edge pairs from an edge pair having a lowest matching cost, among edge pairs included in the candidate edge sets.

9. The method of claim 8, wherein the matching of the edge pairs comprises:
comparing a matching cost of the edge pairs included in the candidate edge set with a predetermined threshold value; and
completing the matching between the edge pairs when the matching cost exceeds the threshold value.

10. The method of claim 5, wherein the validating of the matching result comprises:
determining whether the edge pairs according to the matching result yields a shape expected for each part of the garment (1530).

11. The method of claim 5, further comprising:
merging the graph corresponding to the matched edge pair (1115); and
generating a new edge (1133, 1135) by concatenating segments (350, 410, 420) corresponding to the merged graph.

12. The method of claim 4, wherein converting the matched edges into the sewing lines comprises:
searching for nodes (310, 320, 330) corresponding to the matched edges (430); and
generating the sewing lines for the pattern pieces (235, 255) by pairing the searched nodes (310, 320, 330).

13. The method of claim 12, wherein nodes (310, 320, 330) corresponding to the matched edges (430) comprise a starting node corresponding to a starting point of the matched edges, an ending node corresponding to an ending point of the matched edges, and internal nodes located between the starting node and the ending node.

14. The method of claim 13, wherein determining the matching edges comprises:
determining presence of a loop between the starting point and the ending point;
aligning the internal nodes in an order of normalized lengths responsive to determining that the loop is not present; and
pairing an internal node of an opposite matched edge with an internal node of a most adjacent edge (430).

15. The method of claim 13, wherein determining the matching edges comprises:
determining presence of a loop between the starting point and the ending point;
pairing the nodes by setting each of the nodes as the starting node responsive to determining that the loop is present; and
determining a pairing score according to the pairing between the nodes.

16. The method of claim 1, further comprising at least one of:
generating a digital representation of the garment in which the pattern pieces (235, 255) are sewn along the sewing lines; and
displaying draping of the digital representation of the garment (1530) on an avatar (211; 1510).

17. A non-transitory computer-readable storage medium storing instructions thereon, the instructions when executed by a processor, cause the processor to:.
receive placement information of at least a subset of pattern pieces (235, 255), the placement information indicating at least matching relationships between at least the subset of the pattern pieces (235, 255) and placement points (215) of an avatar (211) onto which a garment formed of the pattern pieces (235, 255) is draped;
generate a graph comprising nodes (310, 320, 330) and segments (350, 410, 420), the nodes (310, 320, 330) located on outlines of the pattern pieces, each of the segments (350, 410, 420) indicating a directed connection between adjacent ones of the nodes (310, 320, 330); and
determine matching edges (430) of at least the subset of the pattern pieces (235, 255) identified by the placement information as sewing lines for at least the subset of the pattern pieces (235, 255) using the graph, an edge (430) representing an area in one of the pattern pieces (235, 255) to be sewn with another one of the pattern pieces (235, 255) and including at least one of the segments (350, 410, 420),
**characterized in that** the matching edges included in a candidate edge set are matched based on a matching cost of edge pairs that match each other in response to areas sewn together in the pattern piece.

18. The non-transitory computer-readable storage medium of claim 17, wherein the instructions to generate the graph comprises instructions to:
extract, from points on the outlines of at least the subset of the pattern pieces (235, 255), a corner point at which portions of an outline intersect with an angle that is larger than a predetermined reference angle;
extract, from the points on the outlines of at least the subset of the pattern pieces (235, 255), a notch corresponding to a point where a notch mark is located;
set the corner point and the notch as nodes (310, 320, 330);
set a line connecting two adjacent ones of the nodes (310, 320, 330) as one of the segments (350, 410, 420); and
include, in the graph, the nodes (310, 320, 330) and the segments (350, 410, 420).

19. The non-transitory computer-readable storage medium of claim 17, wherein each of the edges comprises (i) a pair of the segments (350, 410, 420) in an edge and (ii) directions of the segments (350, 410, 420).

20. A computing device, comprising:
a user interface (1610) configured to receive placement information of at least a subset of pattern pieces (235, 255), the placement information indicating at least matching relationships between at least the subset of the pattern pieces (235, 255) and placement points (215) of an avatar (211) onto which a garment (1530) formed of the pattern pieces (235, 255) is draped; and
a processor (1630) coupled to the user interface and configured to:
generate a graph comprising nodes (310, 320, 330) and segments (350, 410, 420), the nodes (310, 320, 330) located on outlines of the pattern pieces (235, 255), each of the segments (350, 410, 420) indicating a directed connection between adjacent ones of the nodes, and
determine matching edges (430) of at least the subset of the pattern pieces (235, 255) identified by the placement information as sewing lines for at least the subset of the pattern pieces (235, 255) using the graph, an edge (430 representing an area in one of the pattern pieces (235, 255) to be sewn with another one of the pattern pieces (235, 255) and including at least one of the segments (350, 410, 420),
**characterized in that** the matching edges included in a candidate edge set are matched based on a matching cost of edge pairs that match each other in response to areas sewn together in the pattern piece.

## Patentansprüche

1. Computerimplementiertes Verfahren zum Bestimmen von Nählinien für Nähmusterteile, die zum Bilden eines Kleidungsstücks kombiniert werden, umfassend:
Empfangen (110) von Platzierungsinformationen von mindestens einer Untergruppe von Musterteilen (235, 255), wobei die Platzierungsinformationen mindestens Paarungs-Beziehungen zwischen mindestens der Untergruppe der Musterteile (235, 255) und Platzierungspunkten (215) eines Avatars (211), auf dem das Kleidungsstück (1530) drapiert ist, angeben;
Erzeugen (120) eines Graphen, umfassend Knoten (310, 320, 330) und Segmente (350, 410, 420), wobei sich die Knoten (310, 320, 330) auf Umrissen der Musterteile (235, 255) befinden, wobei jedes der Segmente (350, 410, 420) eine gerichtete Verbindung zwischen Benachbarten der Knoten (310, 320, 330) angibt; und
Bestimmen (130) von Paarungs-Kanten (430) von mindestens der durch die Platzierungsinformationen identifizierten Untergruppe der Musterteile (235, 255) als die Nählinien für mindestens die Untergruppe der Musterteile (235, 255) unter Verwendung des Graphen, der die Knoten (310, 320, 330) und die Segmente (350, 410, 420) umfasst, wobei eine Kante (430) einen Bereich in einem der Musterteile (235, 255) repräsentiert, der mit einem anderen der Musterteile (235, 255) vernäht werden soll, und mindestens eines der Segmente (350, 410, 420) einschließt,
wobei das Verfahren **dadurch gekennzeichnet ist, dass**
in Reaktion auf Bereiche, die im Musterteil zusammengenäht werden, die in einem Kandidaten-Kantensatz enthaltenen Paarungs-Kanten gepaart werden, basierend auf Paarungs-Kosten von Kantenpaaren, die einander entsprechen.

2. Verfahren nach Anspruch 1, wobei das Erzeugen des Graphen Folgendes umfasst:
Extrahieren, aus Punkten auf den Umrissen mindestens der Untergruppe der Musterteile (235, 255), eines Eckpunktes, an dem sich Teile eines Umrisses mit einem Winkel schneiden, der größer als ein vorbestimmter Referenzwinkel ist;
Extrahieren, aus den Punkten auf den Umrissen mindestens der Untergruppe der Musterteile (235, 255), einer Kerbe, die einem Punkt entspricht, an dem sich eine Kerbenmarke befindet;
Festlegen des Eckpunktes und der Kerbe als Knoten (310, 320, 330);
Festlegen einer Linie, die zwei Benachbarte der Knoten (310, 320, 330) als eines der Segmente (350, 410, 420) verbindet; und
Integrieren, in den Graphen, der Knoten (310, 320, 330) und der Segmente (350, 410, 420).

3. Verfahren nach Anspruch 1, wobei jede der Kanten (430) (i) ein Paar der Segmente (350, 410, 420) in einer Kante und (ii) Richtungen der Segmente (350, 410, 420) umfasst.

4. Verfahren nach Anspruch 1, wobei das Bestimmen der Paarungs-Kanten Folgendes umfasst: sequenziell Paaren von Kanten (430), die Bereichen von mindestens der Untergruppe der zu nähenden Musterteile (235, 255) entsprechen, basierend auf einem Satz einer passenden Reihenfolge gemäß den Platzierungsinformationen und dem Graphen; und
Umwandeln der gepaarten Kanten (430) in die Nählinien für die Musterteile (235, 255).

5. Verfahren nach Anspruch 4, wobei das sequenzielle Paaren der Kanten Folgendes umfasst:
Konfigurieren eines Kandidatenkantensatzes durch Extrahieren von Kanten (430) jedes der Musterteile (235, 255) basierend auf den Platzierungsinformationen;
Extrahieren der Kandidaten-Kantenpaarsätze, umfassend passende Kantenpaare aus den Kanten (430);
Paaren der Kantenpaare auf der Grundlage der Paarungs-Kosten der Kantenpaare, die in dem Kandidaten-Kantenpaarsatz enthalten sind;
Validieren eines Paarungs-Ergebnisses zwischen den Kantenpaaren, um ein Validierungsergebnis zu erzeugen; und Markieren von verbleibenden Kanten, die nicht zu den durch Paarung gebildeten Kantenpaaren gehören, mit einem Tag, das eine für einen Teil des Kleidungsstücks (1530) erwartete Form angibt, basierend auf dem Validierungsergebnis.

6. Verfahren nach Anspruch 5, wobei die Paarungs-Kosten nach der Zusammenführbarkeit der Kanten (430) berechnet werden, wie durch mindestens eines von (i) einem Tag, das jede der Kanten angibt, die ein Kantenpaar bilden, und (ii) einem Charakteristikum jeder der Kanten, die das Kantenpaar bilden, bestimmt.

7. Verfahren nach Anspruch 5, wobei die Paarungs-Kosten im Voraus auf Grundlage mindestens eines von einem Längenverhältnis zwischen Kanten (430), die ein Kantenpaar bilden, einer Gesamtlänge der Kanten, die das Kantenpaar bilden, Richtungen von Normalvektoren der Kanten, die das Kantenpaar bilden, und eines Abstands zwischen Kanten, die das Kantenpaar konfigurieren, berechnet werden.

8. Verfahren nach Anspruch 5, wobei das Paaren der Kantenpaare Folgendes umfasst:
sequenzielles Paaren der Kantenpaare von einem Kantenpaar mit den niedrigsten Paarungs-Kosten unter den Kantenpaaren, die in den Kandidaten-Kantensätzen enthalten sind.

9. Verfahren nach Anspruch 8, wobei das Paaren der Kantenpaare Folgendes umfasst:
Vergleichen der Paarungs-Kosten der in der Kandidatenkantengruppe enthaltenen Kantenpaare mit einem vorbestimmten Schwellenwert; und
Abschließen des Paarens zwischen den Kantenpaaren, wenn die Paarungs-Kosten den Schwellenwert überschreiten.

10. Verfahren nach Anspruch 5, wobei das Validieren des Paarungs-Ergebnisses Folgendes umfasst:
Feststellen, ob die Kantenpaare gemäß dem Paarungs-Ergebnis eine für jeden Teil des Kleidungsstücks (1530) eine erwartete Form ergeben.

11. Verfahren nach Anspruch 5, ferner umfassend:
Zusammenführen des Graphen, entsprechend dem durch Paarung gebildeten Kantenpaar (1115), und Erzeugen einer neuen Kante (1133, 1135) durch Verketten von Segmenten (350, 410, 420), entsprechend dem zusammengeführten Graphen.

12. Verfahren nach Anspruch 4, wobei das Umwandeln der gepaarten Kanten in Nählinien Folgendes umfasst:
Suchen nach Knoten (310, 320, 330), entsprechend den gepaarten Kanten (430); und
Erzeugen der Nählinien für die Musterteile (235, 255) durch Paaren der gesuchten Knoten (310, 320, 330).

13. Verfahren nach Anspruch 12, wobei Knoten (310, 320, 330), entsprechend den gepaarten Kanten (430), einen Startknoten, entsprechend einem Startpunkt der gepaarten Kanten, einen Endknoten, entsprechend einem Endpunkt der gepaarten Kanten, und innere Knoten, angeordnet zwischen dem Startknoten und dem Endknoten, umfassen.

14. Verfahren nach Anspruch 13, wobei das Bestimmen der Paarungs-Kanten Folgendes umfasst:
Bestimmen des Vorhandenseins einer Schleife zwischen dem Startpunkt und dem Endpunkt; Ausrichten der inneren Knoten in einer Reihenfolge normalisierter Längen als Reaktion auf das Feststellen, dass die Schleife nicht vorhanden ist; und
Paaren eines inneren Knotens einer gegenüberliegenden gepaarten Kante mit einem inneren Knoten einer am nächsten benachbarten Kante (430).

15. Verfahren nach Anspruch 13, wobei das Bestimmen der Paarungs-Kanten Folgendes umfasst:
Feststellen des Vorhandenseins einer Schleife zwischen dem Startpunkt und dem Endpunkt;
Paaren der Knoten, indem jeder der Knoten als der Startknoten festgelegt wird, in Reaktion auf die Feststellung, dass die Schleife vorhanden ist; und
Bestimmen eines Paarungspunktwertes entsprechend der Paarung zwischen den Knoten.

16. Verfahren nach Anspruch 1, ferner umfassend mindestens eines von:
Erzeugen einer digitalen Darstellung des Kleidungsstücks, in dem die Musterteile (235, 255) entlang der Nählinien genäht sind; und
Anzeigen der Drapierung der digitalen Darstellung des Kleidungsstücks (1530) auf einem Avatar (211; 1510).

17. Nicht flüchtiges, rechnerlesbares Speichermedium, auf dem Anweisungen gespeichert sind, wobei die Anweisungen, wenn sie von einem Prozessor ausgeführt werden, den Prozessor veranlassen zum:
Empfangen von Platzierungsinformationen von mindestens einer Untergruppe von Musterteilen (235, 255), wobei die Platzierungsinformationen mindestens Paarungs-Beziehungen zwischen mindestens der Untergruppe der Musterteile (235, 255) und Platzierungspunkten (215) eines Avatars (211), auf den ein aus den Musterteilen (235, 255) gebildetes Kleidungsstück drapiert ist, angeben;
Erzeugen eines Graphen, umfassend Knoten (310, 320, 330) und Segmente (350, 410, 420), wobei sich die Knoten (310, 320, 330) auf Umrissen der Musterteile befinden, wobei jedes der Segmente (350, 410, 420) eine gerichtete Verbindung zwischen Benachbarten der Knoten (310, 320, 330) angibt; und
Bestimmen von Paarungs-Kanten (430) von mindestens der durch die Platzierungsinformationen identifizierten Untergruppe der Musterteile (235, 255) als Nählinien für mindestens die Untergruppe der Musterteile (235, 255) unter Verwendung des Graphen, wobei eine Kante (430) einen Bereich in einem der Musterteile (235, 255), das mit einem anderen der Musterteile (235, 255) zu vernähen ist, darstellt und mindestens eines der Segmente (350, 410, 420) beinhaltet, **dadurch gekennzeichnet, dass** in Reaktion auf im Musterteil zusammengenähte Bereiche die in einem Kandidaten-Kantensatz enthaltenen Paarungs-Kanten auf Grundlage der Paarungs-Kosten von Kantenpaaren, die einander entsprechen, gepaart werden.

18. Nicht flüchtiges, rechnerlesbares Speichermedium nach Anspruch 17, wobei die Anweisungen zum Erzeugen des Graphen Anweisungen umfassen, um:
aus Punkten an den Umrissen mindestens der Untergruppe der Musterteile (235, 255) einen Eckpunkt, an dem sich Teile eines Umrisses mit einem Winkel schneiden, der größer als ein vorbestimmter Referenzwinkel ist, zu extrahieren;
aus den Punkten an den Umrissen mindestens der Untergruppe der Musterteile (235, 255) eine Kerbe, die einem Punkt entspricht, an dem sich eine Kerbenmarke befindet, zu extrahieren;
den Eckpunkt und die Kerbe als Knoten (310, 320, 330) festzulegen;
eine Linie, die zwei Benachbarte der Knoten (310, 320, 330) als eines der Segmente (350, 410, 420) verbindet, festzulegen; und
in den Graphen die Knoten (310, 320, 330) und die Segmente (350, 410, 420) zu integrieren.

19. Nicht flüchtiges, rechnerlesbares Speichermedium nach Anspruch 17, wobei jede der Kanten (i) ein Paar der Segmente (350, 410, 420) in einer Kante und (ii) Richtungen der Segmente (350, 410, 420) umfasst.

20. Rechenvorrichtung, umfassend:
eine Benutzerschnittstelle (1610), dazu konfiguriert, Platzierungsinformationen von mindestens einer Untergruppe von Musterteilen (235, 255) zu empfangen, wobei die Platzierungsinformationen mindestens Paarungs-Beziehungen zwischen mindestens der Untergruppe der Musterteile (235, 255) und Platzierungspunkten (215) eines Avatars (211), auf den ein aus den Musterteilen (235, 255) gebildetes Kleidungsstück (1530) drapiert ist, angeben; und
einen Prozessor (1630), gekoppelt mit der Benutzerschnittstelle und dazu konfiguriert:
einen Graphen, umfassend Knoten (310, 320, 330) und Segmente (350, 410, 420), zu erzeugen, wobei sich die Knoten (310, 320, 330) auf Umrissen der Musterteile (235, 255) befinden, wobei jedes der Segmente (350, 410, 420) eine gerichtete Verbindung zwischen Benachbarten der Knoten angibt, und
Bestimmen von Paarungs-Kanten (430) von mindestens der durch die Platzierungsinformationen identifizierten Untergruppe der Musterteile (235, 255) als Nählinien für mindestens die Untergruppe der Musterteile (235, 255) unter Verwendung des Graphen, wobei eine Kante (430) einen Bereich in einem der Musterteile (235, 255), das mit einem anderen der Musterteile (235, 255) zu vernähen ist, darstellt und mindestens eines der Segmente (350, 410, 420) beinhaltet, **dadurch gekennzeichnet, dass** in Reaktion auf im Musterteil zusammengenähte Bereiche die in einem Kandidaten-Kantensatz enthaltenen gepaarten Kanten auf Grundlage der Paarungs-Kosten von Kantenpaaren, die einander entsprechen, gepaart werden.

## Revendications

1. Procédé informatique de détermination de lignes de couture pour la couture de pièces de patron combinées afin de former un vêtement, comprenant :
la réception (110) d'informations de placement d'au moins un sous-ensemble de pièces de patron (235, 255), les informations de placement indiquant au moins des relations de mise en correspondance entre au moins le sous-ensemble de pièces de patron (235, 255) et des points de placement (215) d'un avatar (211) sur lequel le vêtement (1530) est drapé ;
la génération (120) d'un graphique comprenant des noeuds (310, 320, 330) et des segments (350, 410, 420), les noeuds (310, 320, 330) étant situés sur les contours des pièces de patron (235, 255), chacun des segments (350, 410, 420) indiquant une liaison orientée entre les noeuds adjacents (310, 320, 330) ; et
la détermination (130) de bords correspondants (430) d'au moins le sous-ensemble de pièces de patron (235, 255) identifiés par les informations de placement comme étant les lignes de couture pour au moins le sous-ensemble de pièces de patron (235, 255) en utilisant le graphique qui comprend les noeuds (310, 320, 330) et les segments (350, 410, 420), un bord (430) représentant une zone dans l'une des pièces de patron (235, 255) à coudre avec une autre des pièces de patron (235, 255) et comprenant au moins l'un des segments (350, 410, 420),
le procédé étant **caractérisé en ce que**
les bords correspondants inclus dans un ensemble de bords candidats sont mis en correspondance sur la base d'un coût de mise en correspondance de paires de bords qui correspondent les uns aux autres en réponse aux zones cousues ensemble dans la pièce de patron.

2. Procédé selon la revendication 1, dans lequel la génération du graphique comprend :
l'extraction, à partir de points situés sur les contours d'au moins le sous-ensemble de pièces de patron (235, 255), d'un point d'angle au niveau duquel des parties d'un contour croisent un angle qui est supérieur à un angle de référence prédéterminé,
l'extraction, à partir des points situés sur les contours d'au moins le sous-ensemble de pièces de patron (235, 255), d'une encoche qui correspond à un point au niveau duquel se trouve une marque d'encoche ;
la définition du point d'angle et de l'encoche comme étant des noeuds (310, 320, 330) ;
la définition d'une ligne qui relie deux noeuds adjacents (310, 320, 330) comme étant l'un des segments (350, 410, 420) ; et
l'inclusion, sur le graphique, des noeuds (310, 320, 330) et des segments (350, 410, 420).

3. Procédé selon la revendication 1, dans lequel chacun des bords (430) comprend (i) une paire de segments (350, 410, 420) dans un bord et (ii) des directions des segments (350, 410, 420).

4. Procédé selon la revendication 1, dans lequel la détermination des bords qui correspondent comprend :
la mise en correspondance successive des bords (430) qui correspondent à des zones d'au moins le sous-ensemble de pièces de patron (235, 255) à coudre sur la base d'un ordre de mise en correspondance défini selon les informations de placement et le graphique ; et
la conversion des bords mis en correspondance (430) en lignes de couture pour les pièces de patron (235, 255).

5. Procédé selon la revendication 4, dans lequel la mise en correspondance successive des bords comprend :
la configuration d'un ensemble de bords candidats en extrayant les bords (430) de chacune des pièces de patron (235, 255) sur la base des informations de placement ;
l'extraction des ensembles de paires de bords candidats comprenant des paires de bords mis en correspondance à partir des bords (430) ;
la mise en correspondance des paires de bords sur la base du coût de mise en correspondance des paires de bords incluses dans l'ensemble de paires de bords candidats ;
la validation d'un résultat de mise en correspondance entre les paires de bords afin de générer un résultat de validation ; et
le marquage des bords restants autres que les paires de bords mis en correspondance avec une balise qui indique une forme prévue pour une partie du vêtement (1530), sur la base du résultat de validation.

6. Procédé selon la revendication 5, dans lequel le coût de mise en correspondance est calculé selon la capacité de fusion des bords (430) déterminée par au moins l'une (i) d'une balise qui indique chacun des bords qui forment une paire de bords, et (ii) d'une caractéristique de chacun des bords qui forment la paire de bords.

7. Procédé selon la revendication 5, dans lequel le coût de mise en correspondance est calculé à l'avance sur la base d'au moins l'un d'un rapport de longueur entre les bords (430) qui forment une paire de bords, d'une longueur totale des bords qui forment la paire de bords, des directions de vecteurs normaux des bords qui forment la paire de bords, et d'une distance entre les bords qui configurent la paire de bords.

8. Procédé selon la revendication 5, dans lequel la mise en correspondance des paires de bords comprend :
la mise en correspondance successive des paires de bords à partir d'une paire de bords qui présente le coût de mise en correspondance le plus faible, parmi les paires de bords incluses dans les ensembles de bords candidats.

9. Procédé selon la revendication 8, dans lequel la mise en correspondance des paires de bords comprend :
la comparaison d'un coût de mise en correspondance des paires de bords incluses dans l'ensemble de bords candidats avec une valeur de seuil prédéterminée ; et
la réalisation de la mise en correspondance entre les paires de bords lorsque le coût de mise en correspondance dépasse la valeur de seuil.

10. Procédé selon la revendication 5, dans lequel la validation du résultat de mise en correspondance comprend :
la détermination du fait que les paires de bords selon le résultat de mise en correspondance donnent ou non une forme prévue pour chaque partie du vêtement (1530).

11. Procédé selon la revendication 5, comprenant en outre :
la fusion du graphique correspondant à la paire de bords mis en correspondance (1115) ; et
la génération d'un nouveau bord (1133, 1135) en concaténant les segments (350, 410, 420) qui correspondent au graphique fusionné.

12. Procédé selon la revendication 4, dans lequel la conversion des bords mis en correspondance en lignes de couture comprend :
la recherche des noeuds (310, 320, 330) qui correspondent aux bords mis en correspondance (430) ; et
la génération des lignes de couture pour les pièces de patron (235, 255) en associant les noeuds recherchés (310, 320, 330).

13. Procédé selon la revendication 12, dans lequel les noeuds (310, 320, 330) qui correspondent aux bords mis en correspondance (430) comprennent un noeud de départ qui correspond à un point de départ des bords mis en correspondance, un noeud de fin qui correspond à un point de fin des bords mis en correspondance, et des noeuds internes situés entre le noeud de départ et le noeud de fin.

14. Procédé selon la revendication 13, dans lequel la détermination des bords mis en correspondance comprend :
la détermination de la présence d'une boucle entre le point de départ et le point de fin ;
l'alignement des noeuds internes dans un ordre de longueurs normalisées en réponse à la détermination du fait que la boucle ne soit pas présente ; et
l'association d'un noeud interne d'un bord mis en correspondance opposé à un noeud interne d'un bord le plus adjacent (430).

15. Procédé selon la revendication 13, dans lequel la détermination des bords mis en correspondance comprend :
la détermination de la présence d'une boucle entre le point de départ et le point de fin ;
l'association des noeuds en définissant chacun des noeuds comme étant le noeud de départ en réponse à la détermination du fait que la boucle soit présente ; et
la détermination d'un score d'association selon l'association entre les noeuds.

16. Procédé selon la revendication 1, comprenant en outre au moins l'un de :
la génération d'une représentation numérique du vêtement sur lequel les pièces de patron (235, 255) sont cousues le long des lignes de couture ; et
l'affichage du drapage de la représentation numérique du vêtement (1530) sur un avatar (211 ; 1510).

17. Support de stockage non transitoire lisible par un ordinateur qui stocke des instructions, les instructions, lorsqu'elles sont exécutées par un processeur, permettant au processeur de :
recevoir les informations de placement d'au moins un sous-ensemble de pièces de patron (235, 255), les informations de placement indiquant au moins des relations de mise en correspondance entre au moins le sous-ensemble de pièces de patron (235, 255) et les points de placement (215) d'un avatar (211) sur lequel un vêtement formé des pièces de patron (235, 255) est drapé ;
générer un graphique comprenant des noeuds (310, 320, 330) et des segments (350, 410, 420), les noeuds (310, 320, 330) étant situés sur les contours des pièces de patron, chacun des segments (350, 410, 420) indiquant une liaison orientée entre les noeuds adjacents (310, 320, 330) ; et
déterminer les bords mis en correspondance (430) d'au moins le sous-ensemble de pièces de patron (235, 255) identifiés par les informations de placement comme étant les lignes de couture pour au moins le sous-ensemble de pièces de patron (235, 255) en utilisant le graphique, un bord (430) représentant une zone dans l'une des pièces de patron (235, 255) à coudre avec une autre des pièces de patron (235, 255) et comprenant au moins l'un des segments (350, 410, 420),
**caractérisé en ce que**
les bords mis en correspondance inclus dans un ensemble de bords candidats sont mis en correspondance sur la base d'un coût de mise en correspondance des paires de bords qui correspondent les uns aux autres en réponse aux zones cousues ensemble dans la pièce de patron.

18. Support de stockage non transitoire lisible par un ordinateur selon la revendication 17, dans lequel les instructions destinées à générer le graphique comprennent des instructions destinées à :
extraire, à partir de points situés sur les contours d'au moins le sous-ensemble de pièces de patron (235, 255), un point d'angle au niveau duquel des parties d'un contour croisent un angle qui est supérieur à un angle de référence prédéterminé ;
extraire, à partir de points situés sur les contours d'au moins le sous-ensemble de pièces de patron (235, 255), une encoche qui correspond à un point au niveau duquel se trouve une marque d'encoche ;
définir le point d'angle et l'encoche comme étant des noeuds (310, 320, 330) ;
définir une ligne qui relie deux noeuds adjacents (310, 320, 330) comme étant l'un des segments (350, 410, 420) ; et
inclure, sur le graphique, les noeuds (310, 320, 330) et les segments (350, 410, 420).

19. Support de stockage non transitoire lisible par un ordinateur selon la revendication 17, dans lequel chacun des bords comprend (i) une paire de segments (350, 410, 420) dans un bord et (ii) les directions des segments (350, 410, 420).

20. Dispositif informatique, comprenant :
une interface utilisateur (1610) configurée pour recevoir les informations de placement d'au moins un sous-ensemble de pièces de patron (235, 255), les informations de placement indiquant au moins des relations de mise en correspondance entre au moins le sous-ensemble de pièces de patron (235, 255) et les points de placement (215) d'un avatar (211) sur lequel un vêtement (1530) formé des pièces de patron (235, 255) est drapé ; et
un processeur (1630) couplé à l'interface utilisateur et configuré pour :
générer un graphique comprenant des noeuds (310, 320, 330) et des segments (350, 410, 420), les noeuds (310, 320, 330) étant situés sur les contours des pièces de patron (235, 255), chacun des segments (350, 410, 420) indiquant une liaison orientée entre les noeuds adjacents ; et
déterminer les bords mis en correspondance (430) d'au moins le sous-ensemble de pièces de patron (235, 255) identifiés par les informations de placement comme étant les lignes de couture pour au moins le sous-ensemble de pièces de patron (235, 255) en utilisant le graphique, un bord (430) représentant une zone dans l'une des pièces de patron (235, 255) à coudre avec une autre des pièces de patron (235, 255) et comprenant au moins l'un des segments (350, 410, 420),
**caractérisé en ce que**
les bords correspondants inclus dans un ensemble de bords candidats sont mis en correspondance sur la base d'un coût de mise en correspondance des paires de bords qui correspondent les uns aux autres en réponse aux zones cousues ensemble dans la pièce de patron.
